# EUROPEAN PATENT APPLICATION

(11) **EP 4 844 016 A1**
(43) Date of publication of application: **25.11.2026**
(21) Application number: 25742012.5
(22) Date of filing: 17.01.2025
(51) Int. Cl.: C08J 5/18

(54) **FLUORINE-BASED RESIN FILM, METHOD FOR PRODUCING SAME, METHOD FOR PRODUCING PIEZOELECTRIC FILM, AND MULTILAYER PIEZOELECTRIC BODY**

(30) Priority: 18.01.2024 JP 2024006086; 18.01.2024 JP 2024006105
(71) Applicant: Kureha Corporation, Chuo-ku Tokyo 103-8552 (JP)
(72) Inventor: KITAMURA, Hideki, Tokyo 103-8552 (JP); SAIGUSA, Kotaku, Tokyo 103-8552 (JP)
(74) Representative: Zimmermann & Partner Patentanwälte mbB
(86) International application number: PCT/JP2025/001301
(87) International publication number: WO 2025/154787

(57) **Abstract**

A fluorine-based resin film having a melt viscosity η of 600 Pa·s or more and 4000 Pa·s or less, the melt viscosity η being measured at a measurement temperature of 260°C and a shear rate of 50 s⁻¹ during measurement. The fluorine-based resin film has a maximum height of profile Rz of 0.50 µm or less as measured in accordance with JIS B 0601:2001, and the number of foreign substances, each having a size of 100 µm or more, is 7/0.25 m² or less, the size being an arithmetic average value of a maximum width and a minimum width when the film is viewed in plan view.

## Description

### TECHNICAL FIELD

The present invention relates to a fluorine-based resin film and a method for producing the same, a method for producing a piezoelectric film, and a laminated piezoelectric body.

### BACKGROUND ART

Fluorine-based resin films have high properties, examples of the properties including weather resistance, heat resistance, contamination resistance, chemical resistance, solvent resistance, mechanical properties, and secondary processability. Thus, the fluorine-based resin films have been used in various applications such as interior and exterior members of buildings, surface materials of molded products, surface protective materials or back surface protective materials of solar cell modules, and fuel cell members. In particular, the fluorine-based resin films are expected to be applied to a protective film or an optical member because of their high weather resistance, contamination resistance, and chemical resistance, and there is a high demand for a fluorine-based film having few foreign substances and high transparency.

It is also known that some fluorine-based resin films exhibit piezoelectricity by a polarization treatment. A piezoelectric body formed of a fluorine-based resin film is expected to have high transparency and has flexibility. Thus, such a piezoelectric body has been considered for use in, for example, a transparent touch panel. Note that in the present specification, a fluorine-based resin piezoelectric film or a piezoelectric film means a fluorine-based resin film having a piezoelectric constant d₃₃ of 1.0 pC/N or more as measured by a method described below.

In the production of a fluorine-based resin, foreign substances such as a polymer lump may be generated. Such foreign substances may reduce the transparency or cause nonuniform polarization, in the fluorine-based resin film. Thus, the foreign substances are removed from the fluorine-based resin before the production of the film in some cases. For example, in Patent Document 1, a solution with a fluorine-based resin dissolved in methyl ethyl ketone is filtered through a filter to remove foreign substances. In Patent Document 2, a solution with a fluorine-based resin dissolved in a fluorine-containing aliphatic solvent is filtered through a filter to remove foreign substances.

### CITATION LIST

### PATENT DOCUMENT

Patent Document 1: WO 2015/064324
Patent Document 2: JP 2020-164781 A

### SUMMARY OF INVENTION

### TECHNICAL PROBLEM

As described in Patent Document 1 and Patent Document 2, methods, each of the methods including dissolving a fluorine-based resin in a solvent and subjecting the resulting solution to filtration, have been known. When filtration is performed by these methods, each of the solvents is volatilized during the subsequent film formation, and irregularities are likely to occur on the film surface. Furthermore, a large amount of polar organic solvent is used for dissolving the fluorine-based resin. Thus, consideration of the working environment and the natural environment is also required, and the production cost such as recovery of the solvent becomes relatively high.

Also, in a solution casting method, a large amount of a polar organic solvent is used for dissolving the fluorine-based resin. Thus, the solvent needs to be recovered, which not only increases the production cost, but also necessitates consideration of the impact of the organic solvent on the working environment and the natural environment. Furthermore, a polar organic solvent is used for dissolving the fluorine-based resin. Thus, when such a solvent remains in the fluorine-based resin film, polarization in the production process of the piezoelectric film may be hindered. Accordingly, it is preferable to form a film by extrusion molding of a thermally melted fluorine-based resin without using an organic solvent.

On the other hand, in a method including thermally melting a fluorine-based resin and extrusion-molding the thermally molten resin, when the resin is heated to a high temperature, there is a risk that problems may occur, such as modification of the resin and generation of a decomposed product (foreign substance).

The present invention has been made in view of the above problems. The present invention is directed to provide a fluorine-based resin film having few foreign substances and few irregularities on the surface, a method for producing the same, a method for producing a piezoelectric film, and a laminated piezoelectric body.

### SOLUTION TO PROBLEM

One embodiment of the present invention for solving the above problems relates to a fluorine-based resin film described in [1] to [4] below.
[1] A fluorine-based resin film having a melt viscosity η of 600 Pa·s or more and 4000 Pa·s or less, the melt viscosity η being measured at a measurement temperature of 260°C and a shear rate of 50 s⁻¹ during measurement, wherein a maximum height of profile Rz of a surface having a smaller maximum height of profile is 0.50 µm or less, the maximum height of profile Rz being measured in accordance with JIS B 0601:2001, and the number of foreign substances, each having a size of 100 µm or more, is 7/0.25 m² or less, the size being an arithmetic average value of a maximum width and a minimum width when the film is viewed in plan view.
[2] The fluorine-based resin film according to [1], containing a structural unit derived from vinylidene fluoride as a main component.
[3] The fluorine-based resin film according to [1] or [2], wherein the fluorine-based resin film is a film for a piezoelectric film and has a thickness of 80 µm or greater and 1000 µm or less.
[4] The fluorine-based resin film according to any one of [1] to [3], wherein a piezoelectric constant d₃₃ measured in accordance with ISO 19622:2018 is 5.0 pC/N or more and 40.0 pC/N or less.

One embodiment of the present invention for solving the above problems relates to a method for producing a fluorine-based resin film described in [5] to [6] below.

[5] A method for producing the fluorine-based resin film described in any one of [1] to [3], the method including:
heat-melting a fluorine-based resin having a melt viscosity η of 600 Pa·s or more and 4000 Pa·s or less at a temperature higher than a melting temperature of the fluorine-based resin by 75°C or more and equal to or lower than a temperature higher than the melting temperature by 105°C, the melt viscosity η being measured at a measurement temperature of 260°C and a shear rate of 50 s⁻¹ during measurement;
filtering the fluorine-based resin melted at the temperature through a filter having a filtration accuracy of 10 µm or more and 40 µm or less; and forming the filtered fluorine-based resin into a film shape.

[6] A method for producing the piezoelectric film described in [4], the method including:
stretching the fluorine-based resin film described in any one of [1] to [3] at a stretch ratio of 2.5 times or more and 6.0 times or less; and
polarizing the stretched film by applying a DC voltage of 7.0 kV or more and 50.0 kV or less.

One embodiment of the present invention for solving the above problems relates to a fluorine-based resin piezoelectric film described in [1] to [3] below.
[1] A fluorine-based resin piezoelectric film having a melt viscosity η of 600 Pa·s or more and 4000 Pa·s or less, the melt viscosity η being measured at a measurement temperature of 260°C and a shear rate of 50 s⁻¹ during measurement, wherein
   the number of foreign substances, each having a size of 100 µm or more, is 7/0.25 m² or less, the size being an arithmetic average value of a maximum width and a minimum width when the film is viewed in plan view, a retardation is 100 nm or more and 2000 nm or less, and a piezoelectric constant d₃₃ is 5.0 pC/N or more and 40.0 pC/N or less.
[2] The fluorine-based resin piezoelectric film according to [1], wherein a maximum height of profile Rz of a surface having a smaller maximum height of profile is 0.50 µm or less, the maximum height of profile Rz being measured in accordance with JIS B 0601:2001.
[3] The fluorine-based resin piezoelectric film according to [1] or [2], containing a structural unit derived from vinylidene fluoride as a main component.

One embodiment of the present invention for solving the above problems relates to a method for producing a fluorine-based resin piezoelectric film described in [4] below.

[4] A method for producing the fluorine-based resin piezoelectric film described in any one of [1] to [3], the method including:
melting a fluorine-based resin having a melt viscosity η of 600 Pa·s or more and 4000 Pa·s or less at a temperature higher than a melting temperature of the fluorine-based resin by 75°C or more and equal to or lower than a temperature higher than the melting temperature by 105°C, the melt viscosity η being measured at a measurement temperature of 260°C and a shear rate of 50 s⁻¹ during measurement;
filtering the melted fluorine-based resin through a filter having a filtration accuracy of 10 µm or more and 40 µm or less;
molding the filtered fluorine-based resin into a film shape;
stretching the molded film; and
polarizing the molded film.

One embodiment of the present invention for solving the above problems relates to a laminated piezoelectric body described in [1] to [6] below.
[1] A laminated piezoelectric body including the fluorine-based resin piezoelectric film described in any one of [1] to [3], wherein a total light transmittance is 80% or more.
[2] The laminated piezoelectric body according to [1], further including
   an electrode layer disposed on at least one surface of the fluorine-based resin piezoelectric film and having a surface resistivity of 1.0 × 10⁻¹ Ω/sq. or more and 1.0 × 10⁴ Ω/sq. or less.
[3] The laminated piezoelectric body according to [2], wherein
   the electrode layer contains at least one selected from the group consisting of a metal film, a metal oxide film, a metal nanowire, a metal mesh, a conductive polymer compound, a carbon nanotube, and graphene.
[4] The laminated piezoelectric body according to any one of [1] to [3], further including
   a hard coat layer disposed on at least one surface of the fluorine-based resin piezoelectric film.
[5] The laminated piezoelectric body according to any one of [1] to [4], further including
   an antistatic layer disposed on at least one surface of the fluorine-based resin piezoelectric film and having a surface resistivity of 1.0 × 10⁴ Ω/sq. or more and 1.0 × 10⁹ Ω/sq. or less.
[6] The laminated piezoelectric body according to any one of [1] to [5], wherein the antistatic layer and the hard coat layer are disposed in this order on at least one surface of the fluorine-based resin piezoelectric film, and a surface resistivity measured on the hard coat layer is 1.0 × 10⁶ Ω/sq. or more and 1.0 × 10¹² Ω/sq. or less.

### ADVANTAGEOUS EFFECTS OF INVENTION

According to the present invention, there are provided a fluorine-based resin film having few foreign substances and few irregularities on the surface, a method for producing the same, a piezoelectric film, and a method for producing a laminated piezoelectric body.

### BRIEF DESCRIPTION OF DRAWINGS

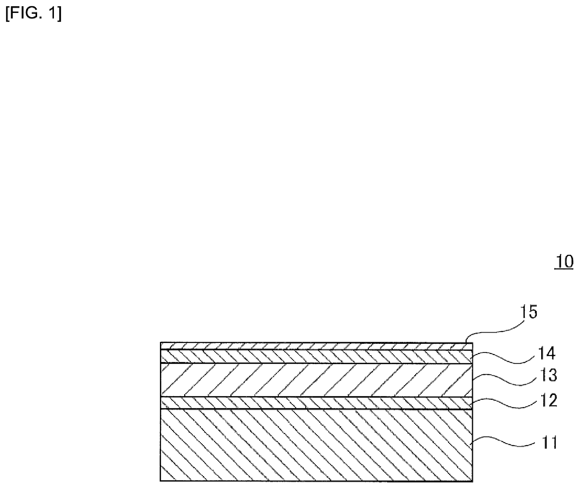

FIG. 1 is a schematic view illustrating a laminated piezoelectric body according to one embodiment of the present invention.

### DESCRIPTION OF EMBODIMENTS

### Fluorine-Based Resin Film

One embodiment of the present invention relates to a fluorine-based resin film. The fluorine-based resin film may be a stretched film or an unstretched film.

The fluorine-based resin film may be a film containing a fluorine-based resin as a main component. A fluororesin is a resin obtained by polymerizing a monomer composed of an olefin containing fluorine, and the phrase "containing a fluororesin as a main component" means that the content ratio of a structural unit derived from a monomer of the fluororesin relative to the total mass of the fluorine-based resin film is 50 mass% or more. A proportion of the content of the fluorine-based resin relative to the total mass of the piezoelectric film is preferably 50 mass% or more and 100 mass% or less, more preferably 70 mass% or more and 100 mass% or less, and still more preferably 90 mass% or more and 100 mass% or less.

The fluorine-based resin can be a homopolymer or a copolymer obtained by polymerizing, for example, tetrafluoroethylene (TFE) or vinylidene fluoride (VDF). Examples of the fluorine-based resin obtained by polymerizing TFE include a copolymer of TFE with, for example, ethylene, perfluoroalkyl vinyl ether, VDF, 1-chloro-1-fluoro-ethylene, chlorotrifluoroethylene (CTFE), and hexafluoropropylene (HFP). Examples of the fluorine-based resin obtained by polymerizing VDF include a homopolymer of VDF, and a copolymer of VDF with, for example, 1-chloro-1-fluoro-ethylene, 1-chloro-2-fluoro-ethylene, trifluoroethylene, TFE, CTFE, tetrafluoropropene, HFP, and perfluoroalkyl vinyl ether.

Among these, from the viewpoint of making it easy to polarize the fluorine-based resin film, a fluorine-based resin (VDF resin) obtained by polymerizing a monomer containing VDF is preferable, a homopolymer of VDF, a copolymer of VDF and HFP, a copolymer of VDF and trifluoroethylene, a copolymer of VDF and TFE, a copolymer of VDF, trifluoroethylene, TFE, and CTFE, and a copolymer of vinylidene fluoride VDF, trifluoroethylene, TFE, and 1-chloro-1-fluoro-ethylene are more preferable, and a homopolymer of VDF is still more preferable. Only one of these fluorine-based resins may be used alone or two or more thereof may be used in combination.

The fluorine-based resin film preferably contains a structural unit derived from VDF as a main component, and a homopolymer of VDF is most preferable. The phrase "contains a structural unit derived from VDF as a main component" means that the content ratio of the structural unit derived from VDF relative to the total mass of the fluorine-based resin film is 50 mass% or more. The content ratio of the structural unit derived from VDF relative to the total mass of the fluorine-based resin film is preferably 50 mass% or more and 100 mass% or less, more preferably 70 mass% or more and 100 mass% or less, and still more preferably 90 mass% or more and 100 mass% or less.

In particular, the fluorine-based resin film and the fluorine-based resin piezoelectric film are expected to have high piezoelectricity, and thus the content ratio of the homopolymer of vinylidene fluoride is preferably as high as possible. The content ratio of the homopolymer relative to the total mass of the fluorine-based resin film is preferably 50 mass% or more and 100 mass% or less, more preferably 70 mass% or more and 100 mass% or less, and still more preferably 90 mass% or more and 100 mass% or less.

The content ratio of the resin having VDF as a structural unit contained in each of the fluorine-based resin film and the fluorine-based resin piezoelectric film can be measured by quantitative analysis using ¹⁹F-NMR and an internal standard.

The melt viscosity of the fluorine-based resin film measured at a measurement temperature of 260°C and a shear rate of 50 s⁻¹ during measurement is 600 Pa·s or more and 4000 Pa·s or less, preferably 600 Pa·s or more and 3500 Pa·s or less, and more preferably 600 Pa·s or more and 2400 Pa·s or less. The lower the melt viscosity, the less likely the filter is to be clogged and the filtration is facilitated. Thus, it is not necessary to increase the melting temperature to enable the filtration, and spot-like irregularities on the film surface due to generation of foreign substances caused by modification of the resin by heat can be suppressed. In addition, the higher the melt viscosity, the larger the molecular weight of the resin. Thus, the selective arrangement of molecular chains becomes difficult and crystallization is less likely to occur. Accordingly, light scattering due to a difference in refractive index between a crystal portion and an amorphous portion is less likely to occur, the transparency of the film is enhanced, and various physical properties of the film are likely to be stabilized.

The melt viscosity is measured in accordance with ASTM D 3835:2016 (ISO 11443:2021, JIS K 7199:1999). Specifically, the viscosity is measured at a measurement temperature of 260°C and a shear rate of 50 s⁻¹ using a capillary rheometer (Capilograph 1D, available from Toyo Seiki Seisaku-sho, Ltd.) and a capillary die having an inner diameter of φ 1 mm and a tube length of 10 mm.

The proportion of resin foreign substances present near the surface increases as the film becomes thinner. Thus, the foreign substances tend to be more easily detected in the film when the film is viewed in plan view. Accordingly, to quantify the amount of foreign substances in the film, the thickness of the film to be subjected to the foreign substance measurement is set to 40 µm or less. The number of foreign substances, each having a size of 100 µm or more, of the fluorine-based resin film having a film thickness of 40 µm or less, when the film is viewed in plan view, is 7/0.25 m² or less, preferably 0/0.25 m² or more and 5/0.25 m² or less, more preferably 0/0.25 m² or more and 3/0.25 m² or less, and still more preferably 0/0.25 m² or more and 1/0.25 m² or less.

The number of foreign substances, each having a size of more than 200 µm, of the fluorine-based resin film having a film thickness of 40 µm or less, when the film is viewed in plan view, is preferably 0/0.25 m² or more and 3/0.25 m² or less, more preferably 0/0.25 m² or more and 2/0.25 m² or less, still more preferably 0/0.25 m² or more and 1/0.25 m² or less, and particularly preferably 0/0.25 m².

The number of foreign substances, each having a size of less than 100 µm, of the fluorine-based resin film having a film thickness of 40 µm or less, when the film is viewed in plan view, is preferably 0/0.25 m² or more and 50/0.25 m² or less, more preferably 0/0.25 m² or more and 25/0.25 m² or less, and still more preferably 0/0.25 m² or more and 16/0.25 m² or less.

As the number of these foreign substances is smaller, the transparency of the fluorine-based resin film is improved, and when the fluorine-based resin film is subjected to a stretching treatment or a polarization treatment, the stretching or polarization can be performed uniformly.

The number of these foreign substances is determined by cutting 25 rectangular films (observation pieces) continuously and adjacently from the fluorine-based resin film having a film thickness of 40 µm or less and calculating the sum of the numbers of foreign substances measured from the respective observation pieces. When the fluorine-based resin film has a thickness of more than 40 µm, the film is stretched until the thickness of the film reaches a thickness of from 35 µm to 40 µm or less, and then the number of foreign substances is measured by the method described below. Specifically, 25 observation pieces each having a size of 0.010 m² (100 mm × 100 mm) are cut out from the fluorine-based resin film so as to be continuously adjacent to each other. Then, the sum of the numbers of foreign substances measured from the respective observation pieces is obtained. At this time, each of the foreign substances is marked by observation with transmitted light, the marked portion is observed with a microscope, and the size of each of the foreign substances is obtained. The size of each of the foreign substances is an arithmetic average value of a maximum width and a minimum width of each of the foreign substances.

The fluorine-based resin film may further satisfy any one or more of the following properties.

A maximum height of profile Rz of the fluorine-based resin film is preferably 0.50 µm or less, more preferably 0.01 µm or more and 0.50 µm or less, still more preferably 0.01 µm or more and 0.40 µm or less, and particularly preferably 0.01 µm or more and 0.30 µm or less. As the surface of the fluorine-based resin film is made smoother, haze is less likely to occur on the surface of the film, and excellent transparency is obtained. A small maximum height of profile Rz indicates that the film has few irregularities such as wrinkles.

The maximum height of profile Rz of the fluorine-based resin film is measured in accordance with JIS B 0601:2001. Specifically, a surface-roughness profilometer (shape analysis laser microscope VK-X260, available from Keyence Corporation) in accordance with JIS B 0601:2001 is used. When, in the fluorine-based resin film having a rectangular shape, the intersection of the diagonal lines is defined as a center point A and the long-side direction is defined as a width direction, the maximum height of profile Rz is measured at a total of three measurement points, i.e., the center point A (measurement point) and two measurement points set at positions 30 mm away from the center point A toward both ends on a line segment passing through a midpoint A parallel to the long side, and the average value thereof is defined as the maximum height of profile of the fluorine-based resin film. When the shape of the fluorine-based resin film is circular or polygonal, the film is cut into a rectangle so as to have the maximum area, and the maximum height of profile is measured by the above method. The surface of the fluorine-based resin film in contact with a cooling roll tends to have a smaller surface roughness Rz as compared with the surface not in contact with the roll. This is because the fluorine-based resin film is pressed against the cooling roll and thus the irregularities of the surface are reduced. Here, the measurement result of a surface having a smaller surface roughness Rz (contact surface with the cooling roll) is defined as the maximum height of profile Rz.

The thickness of the fluorine-based resin film is not particularly limited, but for a film for a piezoelectric film before the stretching treatment and the polarization treatment, the thickness is preferably 80 µm or more and 1000 µm or less, more preferably 100 µm or more and 500 µm or less, still more preferably 100 µm or more and 300 µm or less, still even more preferably 120 µm or more and 200 µm or less, and yet still even more preferably 120 µm or more and 180 µm or less. When the film is made thicker, it is advantageous for electrical properties such as insulating properties and piezoelectric properties. When the film is made thinner, it is advantageous in terms of optical properties such as transparency and cost.

While the thickness of the fluorine-based resin film is generally measured by a method using a micrometer (JIS C 2151:2019), but the thickness is measured by a known method such as a method using a laser displacement meter, a method using an electrostatic capacitance displacement meter, or a method using infrared rays. When, in the fluorine-based resin film, the intersection of two diagonal lines is defined as a center point A and the long-side direction is defined as a width direction, the thickness is measured at a total of three measurement points, i.e., the center point A (measurement point) and two measurement points set at positions 30 mm away from the center point A toward both ends on a line segment passing through a midpoint A parallel to the long side, and the average value thereof is defined as the thickness of the fluorine-based resin film. When the shape of the fluorine-based resin film is circular or polygonal, the film is cut into a rectangle so as to have the maximum area, and the thickness is measured by the above method.

The fluorine-based resin film may be subjected to the polarization treatment to have piezoelectricity. The piezoelectric constant d₃₃ of the fluorine-based resin piezoelectric film is preferably 5.0 pC/N or more and 40.0 pC/N or less, more preferably 8.0 pC/N or more and 40.0 pC/N or less, and still more preferably 10.0 pC/N or more and 30.0 pC/N or less.

The piezoelectric constant of the fluorine-based resin piezoelectric film is measured in accordance with ISO 19622:2018, which is a test method for a piezoelectric constant d₃₃ by a direct quasi-static method (d₃₃ meter method, Berlincourt method). Specifically, a test piece of the fluorine-based resin film is held at a holding force of 1.0 N, and a charge generated when an alternating force with an oscillating force of 0.15 N and a frequency of 110 Hz is applied is measured using a piezoelectric constant measuring device (PiezoMeter System PM300, available from PIEZOTEST Pte Ltd.). The charge is measured on the polarized surface of the fluorine-based resin film, and the piezoelectric constant is calculated using the absolute value of the measured value. At this time, the fast axis direction determined by measuring the birefringence of the fluorine-based resin piezoelectric film is defined as a width direction, and a randomly selected point on the midpoint line of the line segment connecting both ends of the film in the width direction is defined as a point A, and the piezoelectric constant d₃₃ is measured at a total of three measurement points, i.e., the point A (measurement point) and two measurement points set at positions 30 mm away from the point A toward both ends on the line segment in the width direction passing through the point A, and the average value of the piezoelectric constants obtained therefrom is defined as the piezoelectric constant d₃₃ of the fluorine-based resin film.

The fluorine-based resin piezoelectric film has a retardation of 100 nm or more and 2000 nm or less, preferably 500 nm or more and 1800 nm or less, and more preferably 700 nm or more and 1600 nm or less. As the retardation is larger, the degree of molecular orientation of the fluorine-based resin film is higher, the proportion of β-crystals is sufficiently increased, and a fluorine-based resin piezoelectric film having a high piezoelectric constant is easily obtained by a polarizing step.

The retardation is a value measured by a parallel Nicol rotation method using a light source having a wavelength of 587.8 nm. At this time, the fast axis and the slow axis are determined from the in-plane birefringence of the film. The slow axis direction coincides with the average direction of the molecular chains oriented by stretching or extrusion. Thus, when the film is subjected to the stretching treatment in the MD direction (machine direction), the MD direction and the slow axis direction coincide with each other.

The thickness of the fluorine-based resin piezoelectric film is not particularly limited, but is preferably 10 µm or more and 200 µm or less, more preferably 15 µm or more and 80 µm or less, even more preferably 20 µm or more and 80 µm or less, particularly preferably 30.0 µm or more and 80.0 µm or less, still particularly preferably 35.0 µm or more and 70.0 µm or less, and most preferably 35.0 µm or more and 50.0 µm or less. When the film is made thicker, it is advantageous for electrical properties such as insulating properties and piezoelectric properties. When the film is made thinner, it is advantageous in terms of optical properties such as transparency and cost.

The thickness of the fluorine-based resin piezoelectric film is also measured in the same manner as in the above method except for the setting of the measurement points. Specifically, the fast axis direction determined by measuring the birefringence of the piezoelectric film is defined as the width direction, and a randomly selected point on the midpoint line of the line segment connecting both ends of the film in the width direction is defined as a point A, and the thickness is measured at a total of three measurement points, i.e., the point A (measurement point) and two measurement points set at 30 mm intervals from the point A toward both ends on the line segment in the width direction passing through the point A, and the average value thereof is defined as the thickness of the fluorine-based resin piezoelectric film.

The maximum height of profile Rz of the fluorine-based resin piezoelectric film is preferably 0.50 µm or less, more preferably 0.05 µm or more and 0.50 µm or less, even more preferably 0.05 µm or more and 0.40 µm or less, and particularly preferably 0.05 µm or more and 0.30 µm or less. As the surface of the fluorine-based resin piezoelectric film is made smoother, haze is less likely to occur on the surface of the film and excellent transparency is obtained. A small maximum height of profile Rz indicates that the film has few irregularities such as wrinkles.

The maximum height of profile Rz of the fluorine-based resin piezoelectric film is also measured in the same manner as in the above method except for the setting of the measurement points. Specifically, the fast axis direction determined by measuring the birefringence of the piezoelectric film is defined as the width direction, and a randomly selected point on the midpoint line of the line segment connecting both ends of the film in the width direction is defined as a point A, and the maximum height of profile Rz is measured at a total of three measurement points, i.e., the point A (measurement point) and two measurement points set at 30 mm intervals from the point A toward both ends on the line segment in the width direction passing through the point A, and the average value thereof is defined as the maximum height of profile Rz of the fluorine-based resin piezoelectric film.

The haze per unit thickness of the fluorine-based resin film is preferably 0.00%/µm or more and 0.35%/µm or less. The haze of the fluorine-based resin piezoelectric film is preferably 0.0% or more and 10.0% or less, more preferably 0.0% or more and 5.0% or less, and still more preferably 0.0% or more and 3.0% or less. The lower the haze, the more the transparency of the fluorine-based resin film is improved.

The haze of the fluorine-based resin film is measured in accordance with JIS K 7136:2000. Specifically, a haze meter (NDH7700SP II, available from Nippon Denshoku Industries Co., Ltd.) is used. When, in the fluorine-based resin film having a rectangular shape, the intersection of the diagonal lines is defined as a center point A and the long-side direction is defined as a width direction, the haze is measured at a total of three measurement points, i.e., the center point A (measurement point) and two measurement points set at positions 30 mm away from the center point A toward both ends on a line segment passing through a midpoint A parallel to the long side, and the average value thereof is defined as the haze of the fluorine-based resin film. When the shape of the fluorine-based resin film is circular or polygonal, the film is cut into a rectangle so as to have the maximum area, and the haze is measured by the above method. The haze of the fluorine-based resin film is divided by the thickness of the fluorine-based resin film and the result is defined as the haze per unit thickness of the fluorine-based resin film.

The haze of the fluorine-based resin piezoelectric film is also measured in the same manner as in the above method except for the setting of the measurement points. Specifically, the fast axis direction determined by measuring the birefringence of the fluorine-based resin piezoelectric film is defined as the width direction, and a randomly selected point on the midpoint line of the line segment connecting both ends of the film in the width direction is defined as a point A, and the haze is measured at a total of three measurement points, i.e., the point A (measurement point) and two measurement points set at 30 mm intervals from the point A toward both ends on the line segment in the width direction passing through the point A, and the average value thereof is defined as the haze of the fluorine-based resin piezoelectric film.

Note that the fluorine-based resin film may contain a resin besides the fluorine-based resin or another additive as long as the above-described physical properties can be satisfied.

Examples of the resin besides the fluorine-based resin include polycarbonate, polyester such as polyethylene terephthalate and polyethylene naphthalate, a silicone resin, polyether, polyvinyl acetate, and polyolefin such as polyethylene and polypropylene, which can be added to increase flexibility, an acrylic resin, an epoxy resin, polyethylene oxide, polypropylene oxide, polyphenylene oxide, polyphenylene sulfide, polyamide, polyimide, polyamide-imide, polystyrene, polybenzimidazole, and the like, which can be added to increase strength, and odd-numbered polyamide, cyanopullulan, copper phthalocyanine-based polymer, and the like, which can be added to further increase dielectric properties.

### Method for Producing Fluorine-Based Resin Film

A method for producing the above-described fluorine-based resin film is not particularly limited, but preferably includes a step of forming a film from a heat-melted resin by extrusion molding.

For example, the fluorine-based resin film can be produced by a production method including a step of heating and melting the above-described fluorine-based resin (melting step), a step of filtering the melted fluorine-based resin (filtering step), and a step of forming the filtered fluorine-based resin into a film shape (film forming step).

The obtained fluorine-based resin film may be subjected to a step of stretching the film (stretching step) as necessary. In addition, the stretched fluorine-based resin film may be subjected to a step of polarizing the film (polarizing step) as necessary to impart piezoelectricity. The fluorine-based resin film imparted with piezoelectricity can be used as a piezoelectric film.

### Melting Step

In the melting step, the fluorine-based resin is heated and melted. This step can be performed by, for example, melt-kneading the fluorine-based resin with an extruder.

When the fluorine-based resin to be melted in the melting step contains a solvent component, polarization in the subsequent step may be hindered by the solvent component remaining without being volatilized, and thus the content of the solvent component in the fluorine-based resin is preferably small, and is preferably 1 mass% or less and more preferably 0.1 mass% or less with respect to the total mass of the fluorine-based resin. In particular, the content of a polar solvent is preferably 100 ppm or less, more preferably 10 ppm or less, and still more preferably 1 ppm or less, with respect to the total mass of the fluorine-based resin.

The heating temperature of the fluorine-based resin in the melting step is preferably a temperature higher than the melting point of the fluorine-based resin by 75°C or more and equal to or lower than a temperature higher than the melting point by 105°C, more preferably a temperature higher than the melting point by 75°C or more and equal to or lower than a temperature higher than the melting point by 100°C, still more preferably a temperature higher than the melting point by 80°C or more and equal to or lower than a temperature higher than the melting point by 100°C, and particularly preferably a temperature higher than the melting point by 85°C or more and equal to or lower than a temperature higher than the melting point by 95°C. When the melting temperature is set to a temperature higher than the melting point of the fluorine-based resin by 75°C or more, the viscosity of the fluorine-based resin can be reduced to such an extent that the fluorine-based resin can be filtered in the subsequent step. When the melting temperature is set to a temperature equal to or lower than a temperature higher than the melting point of the fluorine-based resin by 105°C, for example, decomposition and condensation of the fluorine-based resin due to heating can be suppressed, and generation of, for example, a decomposition product due to these decomposition and condensation of the fluorine-based resin can be suppressed. When the generation of, for example, the decomposition product is suppressed, the amount of foreign substances in the fluorine-based resin film can be reduced, and the transparency and the smoothness of the fluorine-based resin film can be enhanced. In addition, when the generation of, for example, the decomposition product is suppressed, clogging of the filter due to these decomposition and condensation of the fluorine-based resin can be suppressed, and filtration efficiency of the fluorine-based resin can be enhanced.

According to the findings of the present inventors, the fluorine-based resin needs to be heated to a high temperature such that the resin having a high melt viscosity has a viscosity suitable for filtration. On the other hand, when the resin is heated to a high temperature, for example, decomposition and condensation is likely to occur and clogging of the filter is likely to occur. Thus, it has been difficult to melt and filter the fluorine-based resin. In contrast, the present inventors have found that the fluorine-based resin can be efficiently filtered by setting the melting temperature of the fluorine-based resin having an appropriate melt viscosity to the above range. When the melting temperature of the fluorine-based resin is set to the above range and the fluorine-based resin having a viscosity reduced by melting is filtered, the fluorine-based resin can be filtered without using a polar solvent. In addition, by using no solvent, inhibition of polarization by a solvent during a polarization treatment due to such a polar solvent remaining in the fluorine-based resin film is less likely to occur. Furthermore, the polar solvent is not basically used in the film forming step, and thus it is possible to reduce the burden on the working environment and the natural environment and to reduce the production cost for recovering the polar solvent.

### Filtering Step

In the filtering step, the fluorine-based resin is thermally melted by the melting step and filtered. The method of filtering is not particularly limited, and the melted fluorine-based resin may be caused to pass through a filter, and a known filter type such as a pleated filter or a leaf disc filter can be used.

In the filtering step, the fluorine-based resin is filtered through a filter having a filtration accuracy of 10 µm or more and 40 µm or less. When the filter to be used has a filtration accuracy of 10 µm or more, the melted fluorine-based resin can be easily filtered, the filtration pressure does not become too high, and the filtration time can be shortened. When the filter to be used has a filtration accuracy of 10 µm or more, the fluorine-based resin melted by heating to the above temperature can be easily caused to pass through the filter. In addition, when the filter to be used has a filtration accuracy of 10 µm or more, the filtration pressure does not become too high, and the filtration time can be shortened. When the filter to be used has a filtration accuracy of 40 µm or less, foreign substances in the fluorine-based resin can be sufficiently removed, and a fluorine-based resin film having few foreign substances can be obtained. The filtration accuracy of the filter is preferably 10 µm or more and 35 µm or less, and more preferably 15 µm or more and 30 µm or less.

Note that the filter for performing the filtering of the fluorine-based resin has a multilayer structure including a plurality of layers having, for example, different shapes and different openings. The filtration accuracy of a filter for filtering the fluorine-based resin indicates the filtration efficiency of the filter, that is, the fact that the filter can filter out particles having the size at a predetermined filtration efficiency. For example, in the present specification, a filtration accuracy of 10 µm means that the filter can filter out particles having a size of 10 µm or more with a filtration efficiency of 95% or more.

In this step, the filtering of the fluorine-based resin may be performed a plurality of times. For example, coarse foreign substances may be removed by a filter having a low filtration accuracy (a large numerical value of the filtration accuracy) disposed in a preceding stage, and then finer foreign substances may be removed by a filter having a high filtration accuracy (a small numerical value of the filtration accuracy) disposed in a subsequent stage. The filtration accuracy at this time is set to be a value of a filter having the highest filtration accuracy.

The filter may be disposed between an extruder and a die, the extruder and the die configured to perform the film forming step. Alternatively, the filter may be disposed in an extruder or a melt-kneading apparatus, the extruder being different from the extruder configured to perform the film forming step, and the fluorine-based resin filtered through the filter may be fed into the extruder configured to perform the film forming step to form a film.

### Film Forming Step

In the film forming step, the fluorine-based resin filtered in the filtering step is formed into a film shape.

The film forming method is not particularly limited, and a known method such as extruding the melted and filtered fluorine-based resin from a T-die and winding the extruded fluorine-based resin onto a roll can be used. The film formed by extrusion through the T-die and kept at a temperature of 150°C or higher is brought into contact with a cooling roll and the film is quenched. Thus, the progress of crystallization of the fluorine-based resin can be suppressed. When crystallization of the resin proceeds, the refractive index of light is different between the crystallized portion and the amorphous portion, and thus the haze of the film containing the resin as a component tends to increase due to scattering of light. To increase the transparency of the film, it is effective to suppress the progress of the crystallization. For suppression of the crystallization, the surface temperature of the cooling roll is preferably 125°C or lower, more preferably 110°C or lower, still more preferably 80°C or lower, and particularly preferably 50°C or lower.

In this manner, the fluorine-based resin film according to the present embodiment can be obtained. The produced fluorine-based resin film may be directly accommodated, for example, by being wound up, or may be conveyed to a stretching step or a polarizing step as a subsequent step.

### Stretching Step

In the stretching step, the formed fluorine-based resin film is uniaxially stretched. In the stretching step, the fluorine-based resin film formed in the film forming step may be directly stretched, or the fluorine-based resin film once wound and accommodated may be optionally stretched, for example, by heating.

In the stretching, the stretching direction is not limited as long as the stretching is uniaxial stretching. In the stretching step in mass production, it is preferable to continuously uniaxially stretch the fluorine-based resin film. Specifically, the fluorine-based resin film can be uniaxially stretched in a conveying direction (MD direction) while being conveyed by a plurality of rolls. The stretch ratio (ratio in the MD direction) is preferably 2.5 times or more and 6.0 times or less, and more preferably 3.5 times or more and 5.0 times or less. When the stretch ratio is 2.5 times or more, the proportion of β-crystals described below is sufficiently increased, and a fluorine-based resin film having a high piezoelectric constant is easily obtained by the polarizing step. When the stretch ratio is 6.0 times or less, the fluorine-based resin film is less likely to be broken in the stretching step. In the film uniaxially stretched in the MD direction, the MD direction is the slow axis direction, and a direction (TD direction) perpendicular to the stretching direction is the fast axis direction.

### Polarizing Step

In the polarizing step, a DC voltage is applied to the fluorine-based resin film stretched in the stretching step, and thus piezoelectricity is imparted to the fluorine-based resin film. In the fluorine-based resin containing a homopolymer or copolymer of VDF, an α-crystal is transformed into a β-crystal by the stretching step, and the proportion of β-crystals is increased. By applying a DC voltage to the fluorine-based resin film having an increased proportion of β-crystals having polarity, a fluorine-based resin film having a high piezoelectric constant can be obtained.

The DC voltage to be applied is preferably 7.0 kV or more and 50.0 kV or less, and more preferably 7.5 kV or more and 30.0 kV or less.

The stretching step and the polarizing step may be performed simultaneously, or the polarizing step may be performed after the stretching step is performed.

The fluorine-based resin film after the film forming step or the polarizing step can be wound into a roll shape and, for example, stored and transported.

### Use

The above-described fluorine-based resin film can be used in various applications such as a touch sensor and a touch panel, a piezoelectric film for an actuator, interior and exterior materials for an automobile, furniture, and a building material, a protective film, and a retardation film.

### Laminated Piezoelectric Body

A laminated piezoelectric body can be formed by laminating the fluorine-based resin piezoelectric film (hereinafter, also simply referred to as "piezoelectric film") with another functional layer or another film. The laminated piezoelectric body may include an antistatic layer for the purpose of preventing static electricity generated during handling and may include a hard coat layer or an optical adjustment layer from the viewpoint of preventing the antistatic layer from being scratched or adjusting the hue, as necessary. Furthermore, the laminated piezoelectric body may optionally include an electrode layer for detecting an electric signal generated by piezoelectricity of the piezoelectric film. In addition, a moisture-proof layer can be included to further prevent discoloration or a decrease in transparency of the fluorine-based resin piezoelectric film over time when moisture penetrates from the outside under a high temperature and a high humidity. When the electrode layer is a film having excellent moisture resistance, such as a metal film or a metal oxide film, the film may be also used as a moisture-proof layer. On the other hand, when the electrode layer includes a metal nanowire or a metal mesh, the metal may be oxidized to decrease conductivity, and thus the laminated piezoelectric body may further include an overcoat layer on a non-adhesive surface (a surface opposite to the piezoelectric film) of the electrode layer.

That is, the laminated piezoelectric body includes at least the above piezoelectric film. The laminated piezoelectric body can further include one or more of the antistatic layer, the hard coat layer, the optical adjustment layer, the moisture-proof layer, the electrode layer, and the overcoat layer on at least one surface of the piezoelectric film. These layers can be optionally combined. For example, the laminated piezoelectric body may include the electrode layer on at least one surface of the piezoelectric film and may further include the antistatic layer or the overcoat layer.

Hereinafter, a laminated piezoelectric body according to an embodiment of the present invention and a method for producing the same will be specifically described. However, the laminated piezoelectric body is not to be limited to the present embodiment.

FIG. 1 is a schematic cross-sectional view illustrating the laminated piezoelectric body according to the present embodiment.
As illustrated in FIG. 1, a laminated piezoelectric body 10 can have a piezoelectric film 11, an antistatic layer 12, a hard coat layer 13, an optical adjustment layer 14, and an electrode layer 15 in this order. Hereinafter, each layer will be described.

### Piezoelectric Film

As the piezoelectric film, the above fluorine-based resin piezoelectric film can be used. The piezoelectric constant d₃₃ of the piezoelectric film and the thickness of the piezoelectric film can be the same as the piezoelectric constant d₃₃ and the thickness of the fluorine-based resin piezoelectric film described above, respectively.

### Antistatic Layer

The antistatic layer can be disposed on at least one surface of the piezoelectric film. In the present embodiment, the antistatic layer is preferably in contact with the piezoelectric film. The antistatic layer can make the laminated piezoelectric body less likely to generate static electricity.

The antistatic layer can contain a cured product of a curable composition containing a conductive material. The curable composition containing a conductive material may contain a conductive material, a curable resin, and optionally a crosslinking agent, or may contain a conductive material and a crosslinking agent.

The conductive material may be an ion-conductive conductive material or an electron-conductive conductive material.

Examples of the ion-conductive conductive material include (a) cationic antistatic agents having a cationic group, examples of which include quaternary ammonium salts, pyridinium salts, and primary to tertiary amino groups; (b) anionic antistatic agents, each having an anionic group, examples of the anionic group including a sulfonate group, a sulfate ester group, a phosphate ester group, and a phosphonate group; (c) amphoteric antistatic agents, such as amino acid-based antistatic agents and amino sulfate-based amphoteric antistatic agents; and (d) nonionic antistatic agents such as amino alcohol-based, glycerin-based, and polyethylene glycol-based nonionic antistatic agents.

Examples of the electron-conductive conductive material include a conductive polymer and conductive materials other than the conductive polymer. Examples of the conductive polymer include polyacetylene or a derivative thereof, polythiophene or a derivative thereof, polypyrrole or a derivative thereof, and polyaniline or a derivative thereof. Among these, polythiophene or a derivative thereof is preferred from the viewpoint that the transparency is high and high conductivity is exhibited. These conductive polymers may have a functional group such as a sulfone group, an amino group, an amide group, a hydroxyl group, a mercapto group, or a carboxyl group. Examples of the conductive materials other than the conductive polymer include a carbon nanotube and graphene.

Among them, from the viewpoint of easily lowering the surface resistivity of the laminated piezoelectric body and hardly causing bleed-out, it is preferable to contain an electron-conductive conductive material, and a carbon nanotube is more preferable.

Examples of the curable resin include an acrylic resin, an epoxy resin, a polyurethane resin, a polyimide resin, a melamine resin, a polyester resin, a polyvinyl alcohol resin, a polystyrene resin, a polyvinyl acetate resin, a silicone compound, and polyethylene glycol, each of which has a functional group such as a hydroxy group, a methylol group, a carboxyl group, a sulfonyl group, an epoxy group, or an amino group.

The crosslinking agent may be any agent as long as it reacts with a functional group of the curable resin or the conductive polymer to crosslink the curable resin or the conductive polymer. Examples of the crosslinking agent include a melamine-based crosslinking agent, a polycarbodiimide-based crosslinking agent, a polyoxazolidine-based crosslinking agent, a polyepoxy-based crosslinking agent, and a polyisocyanate-based crosslinking agent.

As described above, as the curable resin or the crosslinking agent for yielding the antistatic layer, for example, a curable resin or a crosslinking agent having an amino group, such as a melamine resin (these are also referred to as "amine-based materials") may be used. In particular, the melamine resin may be preferably used from the viewpoint of having low-temperature curability. On the other hand, such an amine-based material produces an amine (base) that causes a dehydrofluorination reaction of the fluorine-based resin under a high temperature and a high humidity. The production may cause discoloration of the piezoelectric film. Even in such a case, by incorporating the electrode layer or the moisture-proof layer described above, the production of an amine can be suppressed, and thus the discoloration of the piezoelectric film in the laminated piezoelectric body can be further suppressed.

The surface resistivity of the antistatic layer is, for example, preferably 1.0 × 10⁴ Ω/sq. or more and 1.0 × 10⁹ Ω/sq. or less, and more preferably 1.0 × 10⁵ Ω/sq. or more and 1.0 × 10⁸ /sq. or less. When the surface resistivity of the antistatic layer is 1.0 × 10⁹ Ω/sq. or less, the surface resistivity of the laminated piezoelectric body can be further reduced, and an antistatic property can be sufficiently imparted. In addition, to prevent the laminated piezoelectric body from being broken, the laminated piezoelectric body may be handled with the hard coat layer formed on the antistatic layer. When the surface resistivity measured on the hard coat layer is 1.0 × 10⁶ Ω/sq. or more and 1.0 × 10¹² Ω/sq. or less, a sufficient antistatic property is easily obtained. The surface resistivity is more preferably 1.0 × 10⁸ Ω/sq. or more and 5.0 × 10¹¹ Ω/sq. or less. The surface resistivity of the antistatic layer can be measured, for example, using a known resistivity meter (for example, a high resistivity meter (available from Nittoseiko Analytech Co., Ltd., Hiresta UX, model number: MCP-HT800, URS probe) in accordance with JIS C 2139-3-2:2018.

The thickness of the antistatic layer is not particularly limited, but is, for example, preferably 0.010 µm or more and 0.40 µm or less. When the thickness of the antistatic layer is 0.010 µm or more, the generation of static electricity in the laminated piezoelectric body can be further suppressed. When the thickness of the antistatic layer is 0.40 µm or less, discoloration of the piezoelectric film in the laminated piezoelectric body can be made less likely to occur. From the same viewpoint, the thickness of the antistatic layer is more preferably 0.030 µm or more and 0.40 µm or less, and still more preferably 0.045 µm or more and 0.30 µm or less.

The thickness of the antistatic layer can be measured using a spectral interferometric thickness meter (for example, Optical NanoGauge C13027-11, available from Hamamatsu Photonics K.K.). The thickness of each layer in a range including the center of the surface of the laminated piezoelectric body is measured at three points, and the arithmetic average value thereof can be obtained as the thickness of each layer. The thickness of each of the following layers can be measured in the same manner.

### Hard Coat Layer

The hard coat layer can be disposed between the piezoelectric film and the electrode layer. In the present embodiment, the hard coat layer is disposed adjacently to the piezoelectric film (see FIG. 1). The hard coat layer fills scratches on the surface of the piezoelectric film to smooth the surface and makes the surface of the piezoelectric film less likely to be scratched in the production process of the laminated piezoelectric body. Thus, haze of the laminated piezoelectric body can be reduced.

The thickness of the hard coat layer is not particularly limited, but is 0.05 µm or more, preferably 0.3 µm or more and 3.0 µm or less, more preferably 0.5 µm or more and 2.0 µm or less, and still more preferably 0.5 µm or more and 1.5 µm or less.

As described above, the refractive index of the hard coat layer is preferably higher than the refractive index of the piezoelectric film and lower than the refractive index of the electrode layer. Specifically, the refractive index of the hard coat layer is preferably 1.40 or more and less than 1.60, more preferably 1.47 or more and 1.57 or less, and still more preferably 1.49 or more and 1.55 or less. When the refractive index of the hard coat layer is within the above range, interference fringes can be further suppressed while the transmittance is further enhanced.

A difference in refractive index between the hard coat layer and the piezoelectric film is preferably 0.01 or more and 0.20 or less. When the difference in refractive index is 0.01 or more, the transmittance can be further enhanced. When the difference in refractive index is 0.20 or less, interference fringes can be further suppressed.

The hard coat layer may be formed of a material that satisfies the above refractive index. The hard coat layer is usually a resin layer. The resin layer may be formed by applying an application liquid containing a resin and then drying the application liquid or may be formed by applying a curable composition containing a polymerizable compound and then drying and curing the curable composition.

The polymerizable compound may be any of a monomer, an oligomer, and a polymer. The polymerizable compound may be a thermosetting compound or an ionizing radiation compound, but is preferably an ionizing radiation compound. The ionizing radiation may typically be ultraviolet light (UV) or an electron beam (EB).

The ionizing radiation compound is a compound having an ionizing radiation-curable functional group. Examples of the ionizing radiation-curable functional group include ethylenically unsaturated bond groups such as a (meth)acryloyl group, a vinyl group, and an allyl group, and ring-opening polymerizable groups such as an epoxy group and an oxetanyl group. Among them, a compound having an ethylenically unsaturated bond group is preferable, a compound having two or more ethylenically unsaturated bond groups is more preferable, and a polyfunctional (meth)acrylate-based compound is still more preferable. The term "(meth)acrylate" means one or both of acrylate and methacrylate.

Examples of a bifunctional (meth)acrylate-based monomer among the polyfunctional (meth)acrylate-based compounds include ethylene glycol di(meth) acrylate, bisphenol A tetraethoxy diacrylate, bisphenol A tetrapropoxy diacrylate, and 1,6-hexanediol diacrylate. Examples of the (meth)acrylate-based monomer having three or more functional groups include trimethylolpropane tri(meth)acrylate, pentaerythritol tri(meth)acrylate, pentaerythritol tetra(meth)acrylate, dipentaerythritol hexa(meth)acrylate, dipentaerythritol tetra(meth)acrylate, and isocyanuric acid-modified tri(meth)acrylate. The (meth)acrylate-based monomer may be one with a part of the molecular skeleton modified, or one modified with, for example, ethylene oxide, propylene oxide, caprolactone, isocyanuric acid, alkyl, cyclic alkyl, aromatic, or bisphenol can also be used.

Examples of the polyfunctional (meth)acrylate-based oligomer include acrylate-based polymers such as urethane (meth)acrylate, epoxy (meth)acrylate, polyester (meth)acrylate, and polyether (meth)acrylate. Urethane (meth)acrylate is obtained, for example, by a reaction of a polyhydric alcohol and an organic diisocyanate with a hydroxy (meth)acrylate.

In a case where the ionizing radiation-curable compound is an ultraviolet-curable compound, the curable composition preferably contains a photopolymerization initiator. Examples of the photopolymerization initiator include one or more selected from acetophenone, benzophenone, α-hydroxyalkylphenone, Michler's ketone, benzoin, benzyl methyl ketal, benzoyl benzoate, α-acyloxime ester, and thioxanthones.

The curable composition may further contain an additional component besides the above components as necessary. For example, from the viewpoint of suppressing blocking of the hard coat layer in the production process or adjusting the refractive index, the curable composition may further contain particles. The particles may be inorganic particles or organic particles.

Examples of the inorganic particles include, for example, particles of silica (silicon oxide), particles of titanium oxide, particles of zirconium oxide, particles of aluminum oxide, particles of zinc oxide, and tin oxide, diamond powder, sapphire particles, boron carbide particles, silicon carbide particles, and antimony pentoxide particles. Examples of the organic particles include, for example, resin particles of an acrylic resin, resin particles of an acrylic-styrene copolymer, and resin particles of a silicone resin. Among them, inorganic particles are preferable, and silica particles are more preferable, from the viewpoint that the transparency of the hard coat layer is less likely to be impaired. The surface of the inorganic particles may be treated with a surface modifier such as a silane coupling agent.

As described below, the laminated piezoelectric body may further include an optical adjustment layer between the antistatic layer and the electrode layer. The total thickness of the hard coat layer and the optical adjustment layer is preferably 0.30 µm or more and 4.0 µm or less. When the total thickness is 4.0 µm or less, the penetration of moisture from the outside through these layers can be further suppressed, and the effect of suppressing the discoloration of the piezoelectric film by incorporating the moisture-proof layer is more easily maintained. In addition, when the total thickness is 0.30 µm or less, the color tone of the laminated piezoelectric body can be suppressed, and the transparency can be enhanced. From the same viewpoint, the total thickness, the total thickness is more preferably 0.50 µm or more and 3.0 µm or less, and still more preferably 0.60 µm or more and 2.0 µm or less.

### Optical Adjustment Layer

The optical adjustment layer can be disposed between the hard coat layer and a transparent conductive layer. By appropriately adjusting the refractive index and the thickness of the optical adjustment layer, the color tone of the laminated piezoelectric body can be suppressed.

Specifically, as described above, the refractive index of the optical adjustment layer is preferably higher than the refractive index of the hard coat layer and lower than the refractive index of the transparent conductive layer. The laminated piezoelectric body including such an optical adjustment layer can suppress the color tone, for example, by an interference action between light incident on and reflected by the hard coat layer and light reflected by the interface between the optical adjustment layer and the hard coat layer.

From the above viewpoint, the refractive index of the optical adjustment layer is preferably 1.60 or more and less than 1.80, more preferably 1.63 or more and less than 1.78, and still more preferably 1.65 or more and 1.75 or less.

The difference in refractive index between the optical adjustment layer and the hard coat layer is preferably 0.05 or more. When the difference in refractive index is 0.05 or more, the transmittance can be further enhanced.

The thickness of the optical adjustment layer is not particularly limited, but may be 0.05 µm or more. For example, the thickness of the optical adjustment layer may be 0.05 µm or more and 0.5 µm or less, or may be 0.09 µm or more and 0.18 µm or less. When the thickness of the optical adjustment layer is within the above range, the color tone of the laminated piezoelectric body can be suppressed.

The material of the optical adjustment layer may be a material that satisfies such a refractive index. For example, the material may be a material having a refractive index adjusted by adding metal oxide particles to the curable composition exemplified as the material of the hard coat layer.

The metal oxide particles are preferably a refractive index material having a refractive index of 1.50 or more. Examples of such metal oxide particles include aluminum oxide, titanium oxide, zirconium oxide, zinc oxide, and tin oxide, and among these, titanium oxide and zirconium oxide are preferable.

### Transparent Electrode

The transparent electrode (electrode layer) may be formed by sputtering a conductive material on the piezoelectric film on which the respective layers are formed, or by applying a mixture of a conductive material, for example, with a resin.

The electrode layer may be disposed on at least one surface side of the piezoelectric film. The form of the electrode layer is not limited, and may be a nanowire, a mesh, or a thin film. The thin film may be a single layer or a laminate including a plurality of layers.

The conductive material forming the electrode layer is not limited, and at least one metal selected from the group consisting of In, Sn, Zn, Ga, Sb, Ti, Si, Zr, Mg, Al, Au, Ag, Cu, Pd, and W and a metal oxide thereof are suitably used. The metal oxide may further contain a metal atom shown in the above group, as necessary. As the metal oxide, for example, indium-tin composite oxide (ITO) or antimony-tin composite oxide (ATO) is preferably used, and ITO is particularly preferably used. Examples of another typical conductive material of the electrode layer include at least one selected from the group consisting of a metal nanowire, a metal mesh, a conductive polymer compound, a carbon nanotube, and graphene. In particular, examples of the metal nanowire and the metal mesh include a silver nanowire, a silver mesh, a copper nanowire, and a copper mesh. Examples of the conductive polymer compound include polyacetylene and a derivative thereof, polythiophene and a derivative thereof, polypyrrole and a derivative thereof, and polyaniline and a derivative thereof. In the present embodiment, the conductive material is preferably a metal oxide, and more preferably ITO.

Note that a silver nanowire has been attracting attention as a conductive material suitable for weight reduction, resistance reduction, high transparency, and high flexibility of a transparent conductive material, which are required for a device with a larger area and higher functionality. In particular, the silver nanowire can be used to form a flexible electrode layer by a wet process and is expected to be used in various applications. However, the silver nanowire is made of metal silver, and thus the conductivity tends to decrease under high humidity and high temperature conditions, both under sunlight and under artificial light. Thus, a protective layer (overcoat layer) is preferably formed by using an overcoat agent such as a UV curable resin and applying, drying, and curing the overcoat agent on the silver nanowire coating film. In this manner, an electrode layer having scratch resistance and durability can be formed on the substrate and long-term stability of a surface electrical resistance value can be realized under sunlight.

The lower the surface resistivity of the electrode layer, the easier it is to detect a minute signal of the piezoelectric film. On the other hand, to reduce the surface resistivity of the electrode layer, it is necessary to thicken the electrode layer or increase the amount of the conductive material added to form the electrode layer, and thus the transparency tends to decrease. Thus, the surface resistivity of the electrode layer is 1.0 × 10⁻¹ Ω/sq. or more and 1.0 × 10⁴ or less, preferably 1.0 × 10⁻¹ Ω/sq. or more and 1.0 × 10³ or less, more preferably 1.0 × 10⁻¹ Ω/sq. or more and 1.0 × 10² or less, and particularly preferably 1.0 Ω/sq. or more and 1.0 × 10² or less.

The surface resistivity (Ω/sq.) of the electrode layer is measured using a resistivity meter ("LorestaGP MCP-T610", available from Mitsubishi Chemical Analytech Co., Ltd.) by a direct-current four-point probe method in accordance with JIS K 7194-1994. When the overcoat layer is formed on the electrode layer, the surface resistivity detected on the overcoat layer is defined as the surface resistivity of the electrode layer. A volume resistivity is the product of the surface resistivity and the thickness, and thus the surface resistivity is measured in accordance with the method for measuring the volume resistivity. The surface resistivity is measured in a range including the intersection of diagonal lines of the laminated piezoelectric body.

The thickness of the electrode layer is not limited, but the electrode layer is preferably as thick as possible from the viewpoint of having good conductivity. On the other hand, when the electrode layer is too thick, transparency may be reduced. When the electrode layer is too thin, electric resistance may be increased, and a portion with discontinuous conductivity may be formed in the film structure. The thickness is preferably 10 nm or more and 55 nm or less, more preferably 15 nm or more and 55 nm or less, still more preferably 20 nm or more and 55 nm or less, still even more preferably 20 nm or more and 45 nm or less, and particularly preferably 20 nm or more. The thickness of the electrode layer can be determined by a known method from observation of a cross-section of such a laminate. As to the thickness of the electrode layer, the cross-section of the laminated piezoelectric body is observed using a scanning electron microscope ("SU3800", available from Hitachi High-Technologies Corporation) under the conditions of an acceleration voltage of 3.0 kV and a magnification of 50000 times, a thickness of the electrode layer in a range including the intersection of the diagonal lines of the laminated piezoelectric body is measured, and the measured thickness is taken as a representative value of the thickness of the electrode layer of the laminated piezoelectric body.

In the above embodiment, the electrode layer is formed on the optical adjustment layer, but the present invention is not limited thereto. For example, as described above, when the electrode layer contains a metal nanowire or a metal mesh as a conductive material, the optical adjustment layer may be omitted. In this case, the overcoat layer may be further disposed on the electrode layer from the viewpoint of suppressing oxidation of the metal nanowire or the metal mesh. When the overcoat layer is disposed on the electrode layer, the surface resistivity of the electrode layer refers to the surface resistivity measured on the overcoat layer.

In addition, in the above embodiment, the electrode layer is formed on the optical adjustment layer, but a transparent electrode film with an electrode layer formed on a surface of a substrate such as glass or a polymer material may be formed by adhesion to the optical adjustment layer.

### Transparent Electrode Film

The transparent electrode may be used in combination with an existing substrate film. The existing electrode layer may be formed, for example, by laminating the above-described electrode layer on a substrate containing any one or more polymer materials such as, polyethylene terephthalate (PET), cycloolefin polymer (COP), and polycarbonate (PC) or a substrate containing an inorganic material such as glass.

The substrate is a transparent resin layer for supporting the electrode layer. A transparent resin contained in the substrate is preferably a material having heat resistance to withstand heat for crystallizing, for example, ITO. Examples of such a transparent resin include polyester such as polyethylene terephthalate (PET). Among these, PET is preferred.

The thickness of the substrate is not particularly limited as long as it can support the electrode layer, but is preferably 2 µm or more and 300 µm or less, more preferably 10 µm or more and 200 µm or less, still more preferably 20 µm or more and 150 µm or less, and particularly preferably 30 µm or more and 130 µm or less.

The electrode layer is disposed on a surface of the substrate on the piezoelectric film side (optical adjustment layer side in FIG. 1). As the electrode layer, for example, an inorganic electrode such as ITO (indium oxide-tin composite oxide) or tin oxide is preferred, and ITO is more preferred.

### Moisture-Proof Layer

In the above embodiment, the laminated piezoelectric body has the piezoelectric film, but may include a moisture-proof layer to further prevent discoloration or a decrease in transparency of the piezoelectric film over time when moisture penetrates from the outside under a high temperature and a high humidity. The material of the moisture-proof layer is not particularly limited as long as it has transparency and can suppress the penetration of moisture, but is preferably constituted by an inorganic oxide. More preferably, the material of the moisture-proof layer is a thin film (for example, vapor deposition film) of an inorganic oxide.

The inorganic oxide is an oxide of a metal, an oxide of a nonmetal, or an oxide of a metalloid. Examples of the inorganic oxide include aluminum oxide, zinc oxide, antimony oxide, indium oxide, indium tin oxide, calcium oxide, cadmium oxide, silver oxide, gold oxide, chromium oxide, silicon oxide, cobalt oxide, zirconium oxide, tin oxide, titanium oxide, iron oxide, copper oxide, nickel oxide, platinum oxide, palladium oxide, bismuth oxide, magnesium oxide, manganese oxide, molybdenum oxide, vanadium oxide, and barium oxide, and indium tin oxide and silicon oxide are particularly preferable.

The thickness of the moisture-proof layer is not particularly limited, but is preferably 0.005 µm or more and 0.100 µm or less, more preferably 0.010 µm or more and 0.060 µm or less, and still more preferably 0.015 µm or more and 0.050 µm or less, from the viewpoint of highly achieving both the moisture resistance and the transparency.

### Physical Properties of Laminated Piezoelectric Body

### Piezoelectric Constant d₃₃

A piezoelectric constant d₃₃ of the laminated piezoelectric body is preferably 7.0 pC/N or more and 40.0 pC/N or less, for example. When the piezoelectric constant d₃₃ of the laminated piezoelectric body is 7.0 pC/N or more, higher pressure sensitivity is likely to be obtained. When the piezoelectric constant d₃₃ of the laminated piezoelectric body is 40.0 pC/N or less, the above-described appearance failure can be further reduced. From the same viewpoint, the piezoelectric constant d₃₃ of the laminated piezoelectric body is more preferably 10.0 pC/N or more and 40.0 pC/N or less, still more preferably 13.0 pC/N or more and 35.0 pC/N or less, and particularly preferably 15.0 pC/N or more and 30.0 pC/N or less. The piezoelectric constant d₃₃ of the laminated piezoelectric body can be measured by the same method as described above except that the measurement point is a single intersection point of the diagonal lines of the laminated piezoelectric body.

The piezoelectric constant d₃₃ of the laminated piezoelectric body can be adjusted, for example, by the piezoelectric constant d₃₃ of the piezoelectric film which is one of constituent units of the laminated piezoelectric body. When the piezoelectric constant d₃₃ of the piezoelectric film is high, the piezoelectric constant d₃₃ of the laminated piezoelectric body is likely to be high as well.

### Total Light Transmittance

The laminated piezoelectric body preferably has high transparency, for example, from the viewpoint of being applied to a touch panel. Specifically, the total light transmittance of the laminated piezoelectric body is preferably 80% or more, and more preferably 85% or more.

The total light transmittance of the laminated piezoelectric body can be measured using a haze meter (for example, NDH7000SP II, available from Nippon Denshoku Industries Co., Ltd.) based on the method described in JIS K 7361-1. The total light transmittance is to be measured at a position including the intersection of the diagonal lines of the laminated piezoelectric body.

The total light transmittance of the laminated piezoelectric body can be adjusted by the layer configuration, and the refractive index and thickness of each layer. For example, when the laminated piezoelectric body includes the hard coat layer, the haze of the laminated piezoelectric body can be further reduced, and thus the total light transmittance is likely to be higher.

### Hue b^{*} Value, Δb^{*}

The laminated piezoelectric body preferably has a hue b^{*} value of -5.0 or more and 5.0 or less, for example. When the hue b^{*} value is set to -5.0 or more and 5.0 or less, good transparency and visibility can be achieved. The hue difference Δb^{*} before and after storage of the laminated piezoelectric body in an environment of 85°C and 85% RH for 500 hours is preferably 4.0 or less, and more preferably 3.5 or less. When Δb^{*} before and after the storage of the laminated piezoelectric body is 4.0 or less, the change in hue of the laminated piezoelectric body under a high temperature and a high humidity is small, and thus the transparency and the visibility can be favorably maintained.

The b^{*} value of the laminated piezoelectric body can be measured by a method in accordance with JIS Z 8722 using a spectrocolorimeter (for example, SD7000, available from Nippon Denshoku Industries Co., Ltd.). The hue b^{*} value of the laminated piezoelectric body is to be measured at a position including the intersection of the diagonal lines of the laminated piezoelectric body.
The b^{*} value of the laminated piezoelectric body after the storage may be measured by cutting the laminated piezoelectric body into a 25 cm² square, fixing the four corners of the laminated piezoelectric body to a plate made of SUS with a tape, placing the fixed laminated piezoelectric body in a thermo-hygrostat set to a temperature of 85°C and a humidity of 85% RH, holding the laminated piezoelectric body for 500 hours under the above conditions, and then measuring the b^{*} value of the laminated piezoelectric body removed from the thermo-hygrostat in the same manner as the above method.

The b^{*} value and Δb^{*} of the laminated piezoelectric body can be adjusted by the thickness of the antistatic layer and the composition and the thickness of the moisture-proof layer. For example, when the thickness of the antistatic layer is reduced, the b^{*} value and Δb^{*} can be reduced. In addition, when the thickness of the moisture-proof layer is increased, discoloration of the piezoelectric film due to the penetration of moisture can be reduced, and the b^{*} value and the Δb^{*} can be reduced.

### Method for Producing Laminated Piezoelectric Body

The laminated piezoelectric body can be produced by any method. For example, the laminated piezoelectric body of FIG. 1 can be produced through (1) preparing a fluorine-based resin piezoelectric film, (2) forming an antistatic layer on the piezoelectric film, (3) forming a hard coat layer on the antistatic layer, (4) forming an optical adjustment layer on the hard coat layer, and (5) forming an electrode layer on the optical adjustment layer.
When the laminated piezoelectric body includes no hard coat layer, the step (3) can be omitted, and the steps (4) and (5) can also be omitted, as necessary. When the electrode layer contains a metal nanowire or a metal mesh as a conductive material, the step (4) may be omitted. From the viewpoint of further suppressing oxidation of the metal nanowire and the metal mesh, (6) forming an overcoat layer on the electrode layer and (7) forming a moisture-proof layer may be further performed.
Instead of the step (5), after the step (2) or the step (3), (6) forming a clear adhesive (OCA) layer on the hard coat layer or the optical adjustment layer may be performed, and (8) an electrode film can be bonded onto the OCA layer.

### Preparing Piezoelectric Film

As the piezoelectric film containing a fluorine-based resin, the above-described fluorine-based resin piezoelectric film can be used.

### Forming Antistatic Layer

The above-described curable composition for an antistatic layer is applied onto the obtained piezoelectric film and then dried and cured to form an antistatic layer. From the viewpoint of enhancing the low-temperature curability, the curable composition for an antistatic layer is preferably a curable composition containing a conductive material and an amine-based material, and more preferably a curable composition containing a conductive material and a melamine resin.

The curable composition may further contain water or a solvent. Examples of the solvent include alcohol-based solvents such as methanol, ethanol, and isopropyl alcohol.

The application method of the curable composition is not particularly limited, and may be any of, for example, a spin coating method, a gravure coating method, a die coating method, a bar coating method, and a dip coating method.

The drying of the curable composition can be performed by heating the applied curable composition. The heating temperature is preferably a temperature equal to or higher than a temperature at which the solvent can be removed and equal to or lower than the heat deflection temperature of the fluorine-based resin constituting the piezoelectric film, and can be set to, for example, 100°C or more and 150°C or less. The heat deflection temperature can be measured, for example, in accordance with JIS K 7191-2:2015.

### Forming Hard Coat Layer

In the present embodiment, the above curable composition for a hard coat layer is applied onto the piezoelectric film or the antistatic layer and then dried and cured to form a hard coat layer.

The curable composition may further contain a diluting solvent. As the diluting solvent, a solvent having a polarity close to that of the particles is preferable. Examples of the diluting solvent include organic solvents such as an alcohol-based solvent, a ketone-based solvent, an ester-based solvent, a carbonate-based solvent, and an aromatic solvent.

The curable composition can be applied by a known wet process method. Typical examples of the wet process method include dip coating, spray coating, spin coating, gravure coating, die coating, roll coating, flow coating, and curtain coating. In particular, a method capable of continuously forming a layer, such as a roll coating method or a gravure coating method, is preferable from the viewpoint of productivity.

The application and the drying method of the curable composition can be the same as the application and the drying method described above. Note that the heating temperature may be a temperature equal to or lower than the heat deflection temperature of the fluorine-based resin constituting the piezoelectric film, the heating temperature within a range in which the solvent can be volatilized and removed. The heating temperature can be, for example, 60°C or higher and 100°C or lower.

The curing of the curable composition may be curing by heat or curing by ionizing radiation. The curing by ionizing radiation can be performed by irradiation with ultraviolet light or an electron beam. Curing by heat and curing by ionizing radiation may be used in combination.

### Forming Optical Adjustment Layer

As in the step of forming the hard coat layer, the curable composition is applied onto the piezoelectric film, the antistatic layer, or the hard coat layer, and then dried and cured, and thus an optical adjustment layer is formed. However, when the electrode layer contains a metal nanowire or a metal mesh as a conductive material, the optical adjustment layer can be omitted because the conductive layer has high transparency.

### Forming Electrode Layer

An electrode layer can be formed by sputtering a transparent conductive material or applying a solution containing a transparent conductive material and a resin, on the optical adjustment layer.

When the electrode layer contains a metal nanowire or a metal mesh as a conductive material, the conductive material may be oxidized and deteriorated to increase the electric resistance, and thus an overcoat layer can be formed on the electrode layer.

### Other Embodiments

The aforementioned embodiments are exemplary embodiments of the present invention, and it goes without saying that the present invention may include an embodiment other than the aforementioned embodiments within the scope of its core technical concept.

### EXAMPLES

The present invention will be described in detail based on Examples, but the present invention is not limited to these Examples.

### 1. Preparation of Fluorine-Based Resin Film

Films 1 to 10 and 13, which were all fluorine-based resin films, were prepared by the following procedure.

Note that the melt viscosities of fluorine-based resins used as materials were measured in accordance with ASTM D 3835:2016 (ISO 11443:2021, JIS K 7199:1999). Specifically, each of the viscosities was measured at a measurement temperature of 260°C and a shear rate of 50 s⁻¹ using a capillary rheometer (Capilograph 1D, available from Toyo Seiki Seisaku-sho, Ltd.) and a capillary die having an inner diameter of φ 1 mm and a tube length of 10 mm.

The melting temperature of each of the fluorine-based resins was determined as the maximum peak temperature of an endothermic curve in a DSC curve obtained by sealing 5 mg of a measurement sample in an aluminum pan, placing the aluminum pan in a differential scanning calorimeter (DSC-60A, available from Shimadzu Corporation), and heating the aluminum pan from room temperature to 230°C at a temperature rising rate of 10°C/min under a nitrogen atmosphere.

The melting temperature was also defined as the highest temperature in a conduit from an extruder to a filtration device.

### 1-1. Film 1

A vinylidene fluoride homopolymer (PVDF) having a melt viscosity of 2500 Pa·s and a melting temperature of 173°C was melted using a single screw extruder having a bore diameter of φ 50 mm. The melted resin was filtered through a pleated polymer filter having a filtration accuracy of 20 µm, extruded from a T-die, cooled by contact with a cooling roll, and thus an unstretched film having a thickness of 160 µm was obtained. At this time, the melting temperature and the filtration temperature were 260°C.

The obtained unstretched film was introduced into a uniaxial stretching apparatus equipped with a plurality of metal rolls and pinch rolls, and stretched to 4.0 times in the flow direction by adjusting rotation speed ratios of the respective rolls. Further, a voltage of 11.6 kV was applied in the thickness direction from the surface of the film, and thus a film 1 having a thickness of 39 µm was obtained.

### 1-2. Film 2

A film 2 was obtained in the same manner as in the preparation of the film 1 except that a pleated polymer filter having a filtration accuracy of 40 µm was used.

### 1-3. Film 3

A film 3 was obtained in the same manner as in the preparation of the film 1 except that PVDF having a melt viscosity of 800 Pa·s and a melting temperature of 173°C was used.

### 1-4. Film 4

A film 4 was obtained in the same manner as in the preparation of the film 1 except that a pleated polymer filter having a filtration accuracy of 10 µm was used and the melting temperature was set to 275°C.

### 1-5. Film 5

A film 5 was obtained in the same manner as in the preparation of the film 1 except that PVDF having a melt viscosity of 3400 Pa·s and a melting temperature of 173°C was used.

### 1-6. Film 6

A film 6 was obtained in the same manner as in the preparation of the film 1 except that PVDF having a melt viscosity of 800 Pa·s and a melting temperature of 173°C was used and the melting temperature was set to 250°C.

### 1-7. Film 7

A film 7 was obtained in the same manner as in the preparation of the film 1 except that no filter was attached to the single screw extruder.

### 1-8. Film 8

A film 8 was obtained in the same manner as in the preparation of the film 1 except that PVDF having a melt viscosity of 4500 Pa·s and a melting temperature of 173°C was used and no filter was attached to the single screw extruder.

### 1-9. Film 9

A film 9 was obtained in the same manner as in the preparation of the film 1 except that a pleated polymer filter having a filtration accuracy of 60 µm was used.

### 1-10. Film 10

A film 10 was obtained in the same manner as in the preparation of the film 1 except that a pleated polymer filter having a filtration accuracy of 10 µm was used and the melting temperature was set to 280°C. The maximum height of profile Rz of the film 10 was large, and it was difficult to accurately detect the amount of foreign substances.

### 1-11. Film 11 (preparation was impossible)

An attempt was made to prepare a film 11 in the same manner as in the preparation of the film 1 except that a pleated polymer filter having a filtration accuracy of 5 µm was used. However, the filter was clogged with the resin, and such a film could not be obtained.

### 1-12. Film 12 (preparation was impossible)

An attempt was made to prepare a film 12 in the same manner as in the preparation of the film 1 except that PVDF having a melt viscosity of 4500 Pa·s and a melting temperature of 173°C was used, but the filter was clogged with the resin, and such a film could not be obtained.

### 1-13. Film 13

PVDF having a melt viscosity of 2500 Pa·s and a melting temperature of 173°C weighed to 100g was added to 900 ml of N-methylpyrrolidone (NMP). The temperature was raised to 60°C while stirring with a stirrer was performed. The stirring was continued for 6 hours as it was to prepare a resin solution. The resin solution was filtered through a filter having a filtration accuracy of 40 µm. The filtered resin solution was charged into an automatic coating machine, and thus a coating film having a liquid thickness of 600 µm was prepared. The coating film was dried at 120°C for 1 hour, and thus a film 13 was obtained. The film 13 had a great maximum height of profile Rz, and it was difficult to accurately detect the amount of foreign substances.

### 2. Evaluation of Fluorine-Based Resin Film

The maximum height of profile Rz, the number of foreign substances, the thickness, the piezoelectric constant d₃₃, and the haze of each of the obtained films 1 to 10 and 13 were measured by the following methods.

### 2-1. Maximum Height of Profile Rz

### 2-1-1. Fluorine-Based Resin Film (other than Piezoelectric Film)

A surface roughness profilometer (shape analysis laser microscope VK-X260, available from Keyence Corporation) in accordance with JIS B 0601:2001 was used. Then, the surface roughness of the contact surface (surface on the side with Rz smaller) of each of the fluorine-based resin films with the cooling roll was measured. Specifically, when, in each of the fluorine-based resin films, each having a rectangular shape, the intersection of the diagonal lines was defined as a center point A and the long-side direction was defined as a width direction, the maximum height of profile Rz was measured at a total of three measurement points, i.e., the center point A (measurement point) and two measurement points set at positions 30 mm away from the center point A toward both ends on a line segment passing through a midpoint A parallel to the long side, and the average value thereof was defined as the maximum height of profile of each of the fluorine-based resin films.

### 2-1-2. Fluorine-Based Resin Piezoelectric Film

The maximum height of profile Rz of each of the fluorine-based resin piezoelectric films was also measured in the same manner as in the method of 2-1-1 except for the setting of the measurement points. Specifically, the fast axis direction determined by measuring the birefringence of each of the piezoelectric films was defined as a width direction, and a randomly selected point on the midpoint line of the line segment connecting both ends of each of the films in the width direction was defined as a point A, and the maximum height of profile Rz was measured at a total of three measurement points, i.e., the point A (measurement point) and two measurement points set at 30 mm intervals from the point A toward both ends on the line segment in the width direction passing through the point A, and the average value thereof was defined as the maximum height of profile Rz of each of the fluorine-based resin films.

### 2-2. Number of Foreign Substances

Each of the fluorine-based resin films was uniaxially stretched to adjust the thickness to 35 to 40 µm, and then 25 rectangular films (observation pieces), each having a size of 0.010 m² (100 mm × 100 mm), were cut from the fluorine-based resin film so that the 25 rectangular films were cut from continuously adjacent positions. The sum of the numbers of foreign substances measured by observing the respective observation pieces was determined as the number of foreign substances per 0.250 m². At this time, the foreign substances were marked by observation with transmitted light, and the size of each of the foreign substances was determined by observing each of the marked portions with a microscope. The size of each of the foreign substances was defined as an arithmetic average value of a maximum width and a minimum width of each of the foreign substances. In this manner, the number of foreign substances, each having a size of more than 200 µm, the number of foreign substances, each having a size of 100 µm or more and 200 µm or less, and the number of foreign substances, each having a size of less than 100 µm, were determined.

### 2-3. Thickness

### 2-3-1. Fluorine-Based Resin Film (other than Piezoelectric Film)

A digital linear gauge (DG525H, available from Ono Sokki Co., Ltd.) and a gauge stand (SH-022, available from Ono Sokki Co., Ltd.) were used. Specifically, when, in each of the fluorine-based resin films, each having a rectangular shape, the intersection of the diagonal lines was defined as a center point A and the long-side direction was defined as a width direction, the thickness was measured at a total of three measurement points, i.e., the center point A (measurement point) and two measurement points set at positions 30 mm away from the center point A toward both ends on a line segment passing through a midpoint A parallel to the long side, and the average value thereof was defined as the thickness of each of the fluorine-based resin films.

### 2-3-2. Fluorine-Based Resin Piezoelectric Film

The thickness of each of the fluorine-based resin piezoelectric films was also measured in the same manner as in the method of 2-3-1 except for the setting of the measurement points. Specifically, the fast axis direction determined by measuring the birefringence of the piezoelectric film was defined as a width direction, and a randomly selected point on the midpoint line of the line segment connecting both ends of each of the films in the width direction was defined as a point A, and the thickness was measured at a total of three measurement points, i.e., the point A (measurement point) and two measurement points set at positions 30 mm away from the point A toward both ends on the line segment in the width direction passing through the point A, and the average value thereof was defined as the thickness of each of the fluorine-based resin piezoelectric films.

### 2-4. Haze

### 2-4-1. Fluorine-Based Resin Film (other than Piezoelectric Film)

A haze meter (NDH7700SP II, available from Nippon Denshoku Industries Co., Ltd.) was used. Haze was measured in accordance with ISO 14782:2021. Specifically, when, in each of the fluorine-based resin films, each having a rectangular shape, the intersection of the diagonal lines was defined as a center point A and the long-side direction was defined as a width direction, the haze was measured at a total of three measurement points, i.e., the center point A (measurement point) and two measurement points set at positions 30 mm away from the center point A toward both ends on a line segment passing through a midpoint A parallel to the long side, and the average value thereof was defined as the haze of each of the fluorine-based resin films. The haze was divided by the thickness of each of the films measured in 2-3-1, and thus the haze per unit thickness of each of the fluorine-based resin films was obtained.

### 2-4-2. Fluorine-Based Resin Piezoelectric Film

The haze of each of the fluorine-based resin piezoelectric films was also measured in the same manner as in the method of 2-5-1 except for the setting of the measurement points. Specifically, the fast axis direction determined by measuring the birefringence of each of the piezoelectric films was defined as a width direction, and a randomly selected point on the midpoint line of the line segment connecting both ends of the film in the width direction was defined as a point A, and the haze was measured at a total of three measurement points, i.e., the point A (measurement point) and two measurement points set at 30 mm intervals from the point A toward the both ends on the line segment in the width direction passing through the point A, and the average value thereof was defined as the haze of each of the fluorine-based resin piezoelectric films.

### 2-5. Piezoelectric Constant d₃₃

The piezoelectric constant d₃₃ was measured in accordance with ISO 19622:2018. Specifically, a test piece of each of the fluorine-based resin films was held at a holding force of 1.0 N, and a charge generated when an alternating force with an oscillating force of 0.15 N and a frequency of 110 Hz was applied was measured using a piezoelectric constant measuring device (PiezoMeter System PM300, available from PIEZOTEST Pte Ltd.). The charge was measured on the polarized surface of each of the fluorine-based resin films, and the piezoelectric constant was calculated using the absolute value of each of the measured values. The fast axis direction determined by measuring the birefringence of each of the fluorine-based resin films was defined as a width direction, and a randomly selected point on the midpoint line of the line segment connecting both ends of each of the films in the width direction was defined as a point A, and the piezoelectric constant d₃₃ was measured at a total of three measurement points, i.e., the point A (measurement point) and two measurement points set at 30 mm intervals from the point A toward both ends on the line segment in the width direction passing through the point A, and the average value thereof was defined as the piezoelectric constant d₃₃ of each of the fluorine-based resin films.

### 2-6. Retardation

The retardation of a 20 mm × 20 mm piece cut from each of the films was measured by a parallel Nicol rotation method using KOBRA-HB available from Oji Scientific Instruments Co., Ltd. The value at a measurement wavelength of 587.8 nm was taken as the retardation of each of the films. At this time, the fast axis and the slow axis were determined from the in-plane birefringence of each of the films. The slow axis direction coincided with the average direction of the molecular chains oriented by stretching or extrusion. Each of the films used in this Example was stretched in the flow direction of each of the films (machine direction), and thus the MD direction and the slow axis direction coincided with each other.

### 3. Result

The preparation conditions and evaluation results of the respective films are shown in Tables 1 and 2. Note that the film 10 had very large irregularities on the leaf surface, and thus the number of foreign substances could not be measured. The film 13 had a large haze and was opaque, and thus the number of foreign substances could not be measured.

**[Table 1]**

| | | | | Example | Example | Example | Example | Example | Example |
|---|---|---|---|---|---|---|---|---|---|
| | | Film No. | | 1 | 2 | 3 | 4 | 5 | 6 |
| Production method | | Fluorine-based Resin | Melt viscosity /Pa·s | 2500 | 2500 | 800 | 2500 | 3400 | 800 |
| | | | Melting point mp /°C | 173 | 173 | 173 | 173 | 173 | 173 |
| | | Melting step | Melting temperature mt /°C | 260 | 260 | 260 | 275 | 260 | 250 |
| | | | Melting temperature-melting point /°C | 87 | 87 | 87 | 102 | 87 | 77 |
| | | Filtering configuration | Filtration accuracy /µm | 20 | 40 | 20 | 10 | 20 | 20 |
| | | Film forming step | Film forming method | Melt-extrusion | Melt-extrusion | Melt-extrusion | Melt-extrusion | Melt-extrusion | Melt-extrusion |
| Result | Resin film | Rz surface/µm | | 0.45 | 0.44 | 0.47 | 0.43 | 0.46 | 0.44 |
| | | Number of foreign substances (Number/0.25 m²) | > 200 µm | 0 | 0 | 0 | 0 | 0 | 0 |
| | | | 100 to 200 µm | 1 | 5 | 3 | 1 | 2 | 2 |
| | | | < 100 µm | 16 | 20 | 20 | 13 | 18 | 21 |
| | | Thickness/µm | | 160 | 163 | 183 | 162 | 160 | 182 |
| | | Haze per unit thickness/%/µm | | 0.31 | 0.30 | 0.38 | 0.32 | 0.29 | 0.38 |
| | Piezoelectric film | Rz surface/µm | | 0.16 | 0.17 | 0.22 | 0.17 | 0.20 | 0.20 |
| | | Thickness/µm | | 39 | 39 | 38 | 38 | 38 | 38 |
| | | Haze/% | | 1.6 | 1.5 | 2.4 | 1.8 | 1.6 | 2.2 |
| | | Piezoelectric constant d₃₃/pC/N | | 21.7 | 21.5 | 21.8 | 21,3 | 22.3 | 21.9 |
| | | Retardation/nm | | 1261 | 1260 | 1308 | 1274 | 1270 | 1306 |

| | | | | | | | | | |
|---|---|---|---|---|---|---|---|---|---|
| *) The number of foreign substances of the piezoelectric film is the same as the value of the resin film | | | | | | | | | |

**[Table 2]**

| | | | | Comparative Example | Comparative Example | Comparative Example | Comparative Example | Comparative Example | Comparative Example | Comparative Example |
|---|---|---|---|---|---|---|---|---|---|---|
| | | Film No. | | 7 | 8 | 9 | 10 | 11 | 12 | 13 |
| Production method | | Fluorine-based Resin | Melt viscosity /Pa·s | 2500 | 4500 | 2500 | 2500 | 2500 | 4500 | 2500 |
| | | | Melting point mp /°C | 173 | 173 | 173 | 173 | 173 | 173 | 173 |
| | | Melting step | Melting temperature mt /°C | 260 | 260 | 260 | 280 | 260 | 260 | 60 |
| | | | Melting temperature-melting point /°C | 87 | 87 | 87 | 107 | 87 | 87 | 87 |
| | | Filtering configuration | Filtration accuracy /µm | - | - | 60 | 10 | 5 | 20 | 40 |
| | | Film forming step | Film forming method | Melt-extrusion | Melt-extrusion | Melt-extrusion | Melt-extrusion | - | - | Cast |
| Result | Resin film | Rz surface/µm | | 0.57 | 0.90 | 0.59 | 1.32 | | | 0.53 |
| | | Number of foreign substances (Number/0.25 m²) | > 200 µm | 3 | 5 | 2 | Evaluation impossible | - | - | Evaluation impossible |
| | | | 100 to 200 µm | 6 | 9 | 6 | Evaluation impossible | - | - | Evaluation impossible |
| | | | < 100 µm | 31 | 25 | 21 | Evaluation impossible | - | - | Evaluation impossible |
| | | Thickness/µm | | 160 | 161 | 163 | 160 | - | - | 40 |
| | | Haze haze per unit thickness/%/µm | | 0.39 | 0.45 | 0.40 | 0.60 | - | - | 75 |
| | Piezoelectric film | Rz surface/µm | | 0.18 | 0.17 | 0.18 | 0.70 | - | - | 0.53 |
| | | Thickness/µm | | 39 | 40 | 39 | 40 | - | - | 40 |
| | | Haze/% | | 1.5 | 1.5 | 1.5 | 1.9 | - | - | 75.0 |
| | | Piezoelectric constant d₃₃/pC/N | | 19.8 | 21.3 | 21.8 | 20.3 | - | - | 0.0 |
| | | Retardation/nm | | 1262 | 1274 | 1259 | 1274 | - | - | 1 |

| | | | | | | | | | | |
|---|---|---|---|---|---|---|---|---|---|---|
| *) The number of foreign substances of the piezoelectric film is the same as the value of the resin film | | | | | | | | | | |

### 4. Preparation of Laminated Piezoelectric Body

### 4-1. Antistatic Layer

### 4-1-1. Antistatic Layer 1

In a gravure coater (multicoater available from Hirano Tecseed Co., Ltd.), a solution with a coating material P-400MP-A (available from Nagase ChemteX Corporation) containing PEDOT:PSS as a conductive polymer and a coating material P-400MP-B (available from Nagase ChemteX Corporation) containing a crosslinking agent and a conductivity enhancer being mixed at a ratio of 4 : 1 was applied by the multicoater (available from Hirano Tecseed Co., Ltd.), and the resultant was subjected to a heat treatment at 130°C for 0.67 minutes. Thus, an antistatic layer having a thickness of 80 nm was obtained. The surface resistivity of the antistatic layer was 1.2 × 10⁸ Ω/sq.

### 4-1-2. Antistatic Layer 2

A solution (C-169PF) with a coating material C-169PF-A (available from Nagase ChemteX Corporation) containing single-walled carbon nanotubes and a coating material C-169PF-B (available from Nagase ChemteX Corporation) containing a crosslinking agent being mixed at a ratio of 3 : 2 was applied by a multicoater (available from Hirano Tecseed Co., Ltd.), and the resultant was subjected to a heat treatment at 130°C for 1 minute. Thus, an antistatic layer 2 having a thickness of 100 nm was obtained. The surface resistivity of the antistatic layer was 7.1 × 10⁶ Ω/sq.

### 4-2. Formation of Hard Coat Layer

Then, a hard coating agent (BS-CH271 available from Arakawa Chemical Industries, Ltd., average particle size of amorphous silica: 60 nm) was applied by a multicoater, and the resultant was then subjected to a heat treatment at 80°C for 2 minutes, and further irradiated with UV at an integrated light quantity of 200 mJ/cm² and thus photocured, and a hard coat layer having a thickness of 700 nm and a refractive index of 1.50 was formed.

### 4-3. Optical Adjustment Layer

An ultraviolet curable composition containing zirconium oxide particles (OPSTAR RA004 available from Arakawa Chemical Industries, Ltd.) was applied and dried at 40°C for 30 seconds, and the resultant was then irradiated with ultraviolet light at an integrated light quantity of 250 mJ/cm², and an optical adjustment layer (thickness of 102 nm, refractive index of 1.65) was formed.

### 4-4. Formation of Transparent Electrode

### 4-4-1. Transparent Electrode Layer 1

An indium tin metal target (the content ratio of tin relative to the sum of the content of indium and the content of tin was 3 mass%) as a target material was mounted on a magnetron sputtering apparatus, and a piezoelectric film with a predetermined layer formed was mounted as a substrate. Then, while the piezoelectric film with the predetermined layer formed was wound, dehydration and degassing were performed, and evacuation was performed until the degree of vacuum reached 7 × 10⁻⁵ Pa. Subsequently, the substrate temperature was set to room temperature (25°C), a mixed gas having a composition of 99.2 mol% of argon gas and 0.8 mol% of oxygen gas was introduced into a chamber. While the gas in the chamber was discharged such that the pressure in the chamber is 0.4 Pa, a transparent electrode layer having a thickness of 30 nm and substantially composed of an indium tin composite oxide was formed by a reactive sputtering method, and thus a laminated piezoelectric body was obtained.

### 4-4-2. Transparent Electrode Layer 2

A solution with a coating material T-AG230 (available from Seiko PMC Corporation) containing a silver nanowire, the coating material appropriately diluted with alcohol, was applied by a coater and dried with hot air at 40°C for 30 seconds, and thus a transparent electrode layer having a thickness of 80 nm was formed. Next, as a protective layer for the transparent electrode, a solution with a coating material T-YP562 (available from Seiko PMC Corporation) mixed with an additive T-YP462 (available from Seiko PMC Corporation) was applied onto the transparent electrode layer by a coater, dried with hot air at 40°C for 60 seconds, and then irradiated with ultraviolet light at an integrated light quantity of 330 mJ/cm², and thus a protective layer having a thickness of 80 nm was formed. Here, the transparent electrode layer and the protective layer are collectively referred to as a transparent electrode layer 2.

### 4-4-3. Transparent Electrode Film

A transparent electrode precursor film (TETOLIGHT TCF KH100NMH3-100-U8 available from OIKE & Co., Ltd.) with a polyethylene terephthalate (PET) film subjected to a sputtering treatment with indium tin oxide (ITO) was subjected to a crystallizing treatment at 150°C for 90 minutes, and thus a transparent electrode film was prepared. The surface resistivity of the transparent electrode film 1 was 100 Ω/sq. Next, an optical clear adhesive (OCA) sheet (Nitto Denko Corporation, CS9862UA, thickness: 50 µm) was bonded to the polymer piezoelectric film with the predetermined layer formed, a release film was peeled off from the OCA sheet, and the transparent electrode film with the conductive layer surface facing the OCA sheet surface was bonded.

### 4-5. Laminated Piezoelectric Body

### 4-5-1. Laminated Piezoelectric Body 1

The antistatic layer 1 was formed on a surface A of the piezoelectric film 1, and then a hard coat layer was formed on the antistatic layer 1, and thus a laminated piezoelectric body 1 was prepared.

### 4-5-2. Laminated Piezoelectric Body 2

A transparent electrode layer 1 was formed on the hard coat layer of the laminated piezoelectric body 1, and thus a laminated piezoelectric body 2 was prepared.

### 4-5-3. Laminated Piezoelectric Body 3

A transparent electrode film was bonded onto the hard coat layer of the laminated piezoelectric body 1, and thus a laminated piezoelectric body 3 was prepared.

### 4-5-4. Laminated Piezoelectric Body 4

A laminated piezoelectric body 4 was prepared in the same manner as in the laminated piezoelectric body 2 except that the transparent electrode layer 2 was used instead of the transparent electrode layer 1.

### 4-5-5. Laminated Piezoelectric Body 5

A laminated piezoelectric body 5 was prepared in the same manner as in the laminated piezoelectric body 4 except that the antistatic layer 1 was changed to the antistatic layer 2.

### 4-5-6. Laminated Piezoelectric Body 6

A laminated piezoelectric body 6 was prepared in the same manner as in the laminated piezoelectric body 2 except that an optical adjustment layer was formed between the hard coat layer and the transparent electrode layer 1.

### 4-5-7. Laminated Piezoelectric Body 7

The antistatic layer 1 was formed on a surface A of the piezoelectric film 1, and the transparent electrode film 1 was bonded onto the antistatic layer 1, and thus a laminated piezoelectric body 7 was prepared.

### 4-5-8. Laminated Piezoelectric Body 8

The antistatic layer 1 was formed on a surface A of the piezoelectric film 1, and then the transparent electrode layer 1 was formed on the antistatic layer 1, and thus a laminated piezoelectric body 8 was prepared.

### 4-5-9. Laminated Piezoelectric Body 9

A laminated piezoelectric body 9 was prepared in the same manner as in the laminated piezoelectric body 8 except that the transparent electrode layer 1 was changed to the transparent electrode layer 2.

### 4-5-10. Laminated Piezoelectric Body 10

The antistatic layer 1 was formed on a surface A of the piezoelectric film 1, the optical adjustment layer was then formed on the antistatic layer 1, and the transparent electrode layer 1 was formed on the optical adjustment layer, and thus a laminated piezoelectric body 10 was prepared.

### 4-5-11. Laminated Piezoelectric Body 11

A laminated piezoelectric body 11 was prepared in the same manner as in the laminated piezoelectric body 8 except that a hard coat layer was formed on a surface A of the piezoelectric film 1 instead of the antistatic layer 1.

### 4-5-12. Laminated Piezoelectric Body 12

A laminated piezoelectric body 12 was prepared in the same manner as the laminated piezoelectric body 11 except that the transparent electrode layer 1 was replaced with the transparent electrode layer 2.

### 4-5-13. Laminated Piezoelectric Body 13

The hard coat layer was formed on a surface A of the piezoelectric film 1, the optical adjustment layer 1 was then formed on the hard coat layer, and the transparent electrode layer 1 was formed on the optical adjustment layer 1, and thus a laminated piezoelectric body 13 was prepared.

### 4-5-14. Laminated Piezoelectric Body 14

A laminated piezoelectric body 14 was prepared in the same manner as in the laminated piezoelectric body 11 except that the hard coat layer was replaced with the optical adjustment layer.

### 4-5-15. Laminated Piezoelectric Body 15

The antistatic layer 1 was formed on a surface A of the piezoelectric film 1, a hard coat layer was formed on a surface B of the piezoelectric film 1. A separator film that protects an adhesive of a PET protective film (SAT TM30125T available from Sun A. Kaken Co., Ltd.) was peeled off, and the PET protective film was bonded onto the hard coat layer on the surface B. Next, a hard coat layer and an optical adjustment layer were formed on the antistatic layer 1 on the surface A, and the transparent electrode layer 1 was further formed on the optical adjustment layer, and thus a laminated piezoelectric body 15 was prepared.

### 4-5-16. Laminated Piezoelectric Body 16

The antistatic layer 1 was formed on a surface A of the piezoelectric film 1, a hard coat layer was formed on a surface B of the piezoelectric film 1. A separator film that protects an adhesive of a PET protective film (SAT TM30125T available from Sun A. Kaken Co., Ltd.) was peeled off, and the PET protective film was bonded onto the hard coat layer on the surface B. Next, a hard coat layer and the transparent electrode layer 2 were formed on the antistatic layer 1 on the surface A, and thus a laminated piezoelectric body 16 was prepared.

### 5. Evaluation of Laminated Piezoelectric Body

The piezoelectric constant d₃₃, the total light transmittance, the surface resistivity, the haze, and the b^{*} of each of the obtained laminated piezoelectric bodies 1 to 16 were measured by the following methods.

### 5-1. Piezoelectric Constant

Measurement was performed in the same manner as in the measurement method (2-5) except that a value measured in a range including the intersection of the diagonal lines of each of the laminated piezoelectric bodies was taken as the representative value of the piezoelectric constant d₃₃ of each of the laminated piezoelectric bodies.

### 5-2. Total Light Transmittance

As for the total light transmittance of each of the laminated piezoelectric bodies, a range including the intersection of the diagonal lines of each of the laminated piezoelectric bodies was measured using a haze meter (NDH7000SP II, available from Nippon Denshoku Industries Co., Ltd.) in accordance with JIS K 7361-1, and the obtained value was taken as the representative value.

### 5-3. Surface Resistivity

### 5-3-1. Surface Resistivity of Antistatic Layer

The surface resistivity of the antistatic layer of each of the laminated piezoelectric bodies was measured in accordance with JIS C 2139-3-2:2018 using, for example, a known resistivity meter (for example, a high resistivity meter (available from Nittoseiko Analytech Co., Ltd., Hiresta UX, model number: MCP-HT800, URS probe). As for the measurement place, the surface resistivity of the antistatic layer measured in a range including the intersection of the diagonal lines of each of the laminated piezoelectric bodies, each having a rectangular shape, was taken as the representative value.

### 5-3-2. Surface Resistivity of Transparent Electrode

The surface resistivity of the transparent electrode of each of the laminated piezoelectric bodies was measured using a resistivity meter ("LorestaGP MCP-T610", available from Nittoseiko Analytech Co., Ltd.) and a direct-current four-point probe method in accordance with JIS K 7194. The volume resistivity is the product of the surface resistivity and the thickness, and thus the surface resistivity was measured in accordance with the method for measuring the volume resistivity. As for the measurement place, the surface resistivity of the transparent electrode measured in a range including the intersection of the diagonal lines of each of the laminated piezoelectric bodies, each having a rectangular shape, was taken as the representative value. When a protective layer was formed on the electrode, the surface resistivity was measured on the protective layer.

### 5-4. Haze

As the haze value of each of the laminated piezoelectric bodies, the result of measuring the haze of a range including the intersection of diagonal lines of each of the laminated piezoelectric bodies using a haze meter ("NDH7000SP II", available from Nippon Denshoku Industries Co., Ltd.) in accordance with JIS K 7136 was taken as the representative value.

### 5-5. Hue Difference Δb^{*} Value

The result of measuring a range including the intersection of the diagonal lines of each of the laminated piezoelectric bodies before the damp heat storage using a spectral colorimeter (available from Nippon Denshoku Industries Co., Ltd., SD7000) by a method in accordance with JIS Z 8722 was taken as the representative value of the hue b^{*} value.

### 5-6. Thickness

The thickness of each of the antistatic layers was measured using a spectroscopic interferometric thickness meter (Optical NanoGauge C13027-11, available from Hamamatsu Photonics K.K.). The thickness of each layer in a range including the intersection of the diagonal lines of each of the laminated piezoelectric bodies was measured. The thickness of each layer other than the transparent electrode and the piezoelectric film was also measured by the same method.

As for the thickness of the transparent electrode, the cross-section of each of the laminated piezoelectric bodies was observed using a scanning electron microscope ("SU3800", available from Hitachi High-Technologies Corporation) under the conditions of an acceleration voltage of 3.0 kV and a magnification of 50000 times and the thickness of the transparent electrode in a range including the intersection of the diagonal lines of each of the laminated piezoelectric bodies was measured. The obtained measured value was taken as the representative value of the thickness of the transparent electrode.

### 6. Results

The preparation conditions and the evaluation results of the respective laminated piezoelectric bodies are shown in Tables 3 and 4.

**[Table 3]**

| | Antistatic layer No. | Hard coat layer | Optical adjustment layer | Transparent electrode | |
|---|---|---|---|---|---|
| | | | | Transparent electrode film | Electrode layer No. |
| Laminated piezoelectric body 1 | 1 | ○ | - | - | - |
| Laminated piezoelectric body 2 | 1 | ○ | - | - | 1 |
| Laminated piezoelectric body 3 | 1 | ○ | - | ○ | |
| Laminated piezoelectric body 4 | 1 | ○ | - | - | 2 |
| Laminated piezoelectric body 5 | 2 | ○ | - | - | 2 |
| Laminated piezoelectric body 6 | 1 | ○ | ○ | - | 1 |
| Laminated piezoelectric body 7 | 1 | - | - | ○ | - |
| Laminated piezoelectric body 8 | 1 | - | - | - | 1 |
| Laminated piezoelectric body 9 | 1 | - | - | - | 2 |
| Laminated piezoelectric body 10 | 1 | - | ○ | - | 1 |
| Laminated piezoelectric body 11 | - | ○ | - | - | 1 |
| Laminated piezoelectric body 12 | - | ○ | - | - | 2 |
| Laminated piezoelectric body 13 | - | ○ | ○ | - | 1 |
| Laminated piezoelectric body 14 | - | - | ○ | - | 1 |
| Laminated piezoelectric body 15 | 1 | ○, ○ | ○ | - | 1 |
| Laminated piezoelectric body 16 | 1 | ○, ○ | - | - | 2 |

| | | | | | |
|---|---|---|---|---|---|
| (The symbol ○, ○ in the laminated piezoelectric bodies 15 and 16 means that the hard coat layers are formed on both surfaces of the piezoelectric film) | | | | | |

**[Table 4]**

| | Piezoelectric constant d₃₃/ pC/N | Total light transmittance/% | Surface resistivity/ Ω/sq. | Haze/ % | b*/ - |
|---|---|---|---|---|---|
| Laminated piezoelectric body 1 | 19.8 | 92.7 | 1.1 × 1010 | 0.4 | 0.2 |
| Laminated piezoelectric body 2 | 18.2 | 82.8 | 131.0 | 0.5 | 4.2 |
| Laminated piezoelectric body 3 | 17.3 | 88.5 | 101.0 | 0.7 | 1.1 |
| Laminated piezoelectric body 4 | 17.5 | 88.1 | 50.0 | 1.7 | 0.8 |
| Laminated piezoelectric body 5 | 17.8 | 88.0 | 41.0 | 1.6 | 0.8 |
| Laminated piezoelectric body 6 | 17.7 | 89.4 | 122.0 | 0.4 | 1.8 |
| Laminated piezoelectric body 7 | 18.6 | 88.5 | 110.0 | 0.8 | 1.1 |
| Laminated piezoelectric body 8 | 18.4 | 83.1 | 126.0 | 0.7 | 3.9 |
| Laminated piezoelectric body 9 | 17.9 | 87.4 | 47.0 | 1.8 | 0.8 |
| Laminated piezoelectric body 10 | 17.7 | 82.1 | 128.0 | 0.7 | 1.9 |
| Laminated piezoelectric body 11 | 18.1 | 83.3 | 117.0 | 0.5 | 4.0 |
| Laminated piezoelectric body 12 | 17.9 | 88.4 | 44.0 | 1.7 | 0.9 |
| Laminated piezoelectric body 13 | 17.2 | 89.1 | 115.0 | 0.5 | 1.7 |
| Laminated piezoelectric body 14 | 17.8 | 87.1 | 120.0 | 0.8 | 2.6 |
| Laminated piezoelectric body 15 | 17.3 | 89.4 | 125.0 | 0.3 | 1.7 |
| Laminated piezoelectric body 16 | 17.4 | 89.1 | 43.0 | 1.6 | 0.8 |

The present application claims priority from the Japanese Patent Application No. 2024-006086 filed on January 18, 2024, and the Japanese Patent Application No. 2024-006105 filed on January 18, 2024. The matters described in the specification, claims, and drawings at the time of the initial patent filing of the applications are incorporated by reference into the present application.

### INDUSTRIAL APPLICABILITY

The fluorine-based resin film according to an embodiment of the present invention has few foreign substances and few surface irregularities.

### REFERENCE SIGNS LIST

10 Laminated piezoelectric body
11 Piezoelectric film
12 Antistatic layer
13 Hard coat layer
14 Optical adjustment layer
15 Electrode layer

## Claims

1. A fluorine-based resin film having a melt viscosity η of 600 Pa·s or more and 4000 Pa·s or less, the melt viscosity η being measured at a measurement temperature of 260°C and a shear rate of 50 s⁻¹ during measurement, wherein
a surface having a smaller maximum height of profile has a maximum height of profile Rz of 0.50 µm or less, the maximum height of profile Rz being measured in accordance with JIS B 0601:2001, and the number of foreign substances, each having a size of 100 µm or more, is 7/0.25 m² or less, the size being an arithmetic average value of a maximum width and a minimum width when the film is viewed in plan view.

2. The fluorine-based resin film according to claim 1, comprising
a structural unit derived from vinylidene fluoride as a main component.

3. The fluorine-based resin film according to claim 1, wherein the fluorine-based resin film is a film for a piezoelectric film and has a thickness of 80 µm or greater and 1000 µm or less.

4. The fluorine-based resin film according to claim 1, wherein
a piezoelectric constant d₃₃ measured in accordance with ISO 19622:2018 is 5.0 pC/N or more and 40.0 pC/N or less.

5. A method for producing the fluorine-based resin film described in any one of claims 1 to 3, the method comprising:
heat-melting a fluorine-based resin having a melt viscosity η of 600 Pa·s or more and 4000 Pa·s or less at a temperature higher than a melting temperature of the fluorine-based resin by 75°C or more and equal to or lower than a temperature higher than the melting temperature by 105°C, the melt viscosity η being measured at a measurement temperature of 260°C and a shear rate of 50 s⁻¹ during measurement;
filtering the fluorine-based resin melted at the temperature through a filter having a filtration accuracy of 10 µm or more and 40 µm or less; and
forming the filtered fluorine-based resin into a film shape.

6. A method for producing the fluorine-based resin film described in claim 4, the method comprising:
stretching the fluorine-based resin film described in any one of claims 1 to 3 at a stretch ratio of 2.5 times or more and 6.0 times or less; and
polarizing the stretched film by applying a DC voltage of 7.0 kV or more and 50.0 kV or less.

7. A fluorine-based resin piezoelectric film having a melt viscosity η of 600 Pa·s or more and 4000 Pa·s or less, the melt viscosity η being measured at a measurement temperature of 260°C and a shear rate of 50 s⁻¹ during measurement, wherein
the number of foreign substances, each having a size of 100 µm or more, is 7/0.25 m² or less, the size being an arithmetic average value of a maximum width and minimum width when the film is viewed in plan view, a retardation is 100 nm or more and 2000 nm or less, and a piezoelectric constant d₃₃ is 5.0 pC/N or more and 40.0 pC/N or less.

8. The fluorine-based resin piezoelectric film according to claim 7, wherein a maximum height of profile Rz of a surface having a smaller maximum height of profile is 0.50 µm or less, the maximum height of profile Rz being measured in accordance with JIS B 0601:2001.

9. The fluorine-based resin piezoelectric film according to claim 7, comprising
a structural unit derived from vinylidene fluoride as a main component.

10. A method for producing the fluorine-based resin piezoelectric film described in any one of claims 7 to 9, the method comprising:
heat-melting a fluorine-based resin having a melt viscosity η of 600 Pa·s or more and 4000 Pa·s or less at a temperature higher than a melting temperature of the fluorine-based resin by 75°C or more and equal to or lower than a temperature higher than the melting temperature by 105°C, the melt viscosity η being measured at a measurement temperature of 260°C and a shear rate of 50 s⁻¹ during measurement;
filtering the melted fluorine-based resin through a filter having a filtration accuracy of 10 µm or more and 40 µm or less;
forming the filtered fluorine-based resin into a film shape;
stretching the formed film; and
polarizing the formed film.

11. A laminated piezoelectric body comprising
the fluorine-based resin piezoelectric film described in claim 7, wherein a total light transmittance is 80% or more.

12. The laminated piezoelectric body according to claim 11, further comprising
an electrode layer disposed on at least one surface of the fluorine-based resin piezoelectric film and having a surface resistivity of 1.0 × 10⁻¹ Ω/sq. or more and 1.0 × 10⁴ Ω/sq. or less.

13. The laminated piezoelectric body according to claim 12, wherein
the electrode layer contains at least one selected from the group consisting of a metal film, a metal oxide film, a metal nanowire, a metal mesh, a conductive polymer compound, a carbon nanotube, and graphene.

14. The laminated piezoelectric body according to claim 11 or 12, further comprising
a hard coat layer disposed on at least one surface of the fluorine-based resin piezoelectric film.

15. The laminated piezoelectric body according to claim 11 or 12, further comprising
an antistatic layer disposed on at least one surface of the fluorine-based resin piezoelectric film and having a surface resistivity of 1.0 × 10⁴ Ω/sq. or more and 1.0 × 10⁹ Ω/sq. or less.

16. The laminated piezoelectric body according to claim 11 or 12, wherein
an antistatic layer and a hard coat layer are disposed in this order on at least one surface of the fluorine-based resin piezoelectric film, and
a surface resistivity measured on the hard coat layer is 1.0 × 10⁶ Ω/sq. or more and 1.0 × 10¹² Ω/sq. or less.
